# EUROPEAN PATENT APPLICATION

(11) **EP 3 875 166 A1**
(43) Date of publication of application: **08.09.2021**
(21) Application number: 20832660.3
(22) Date of filing: 24.06.2020
(51) Int. Cl.: B01D 53/18, B01D 53/50, B01D 53/78, B01D 53/92, F01N 3/04, F01N 3/08, B05B 1/14

(54) **EXHAUST GAS TREATMENT APPARATUS AND SCRUBBER NOZZLE**

(30) Priority: 28.06.2019 JP 2019122240
(71) Applicant: Fuji Electric Co., Ltd., Kawasaki-shi, Kanagawa 210-9530 (JP)
(72) Inventor: HAYASHI Kazuki, Kawasaki-shi, Kanagawa 210-9530 (JP)
(74) Representative: MERH-IP Matias Erny Reichl Hoffmann Patentanwälte PartG mbB
(86) International application number: PCT/JP2020/024825
(87) International publication number: WO 2020/262459

(57) **Abstract**

Provided is an exhaust gas treatment apparatus including a reactor tower to which an exhaust gas is fed and a liquid for treating the exhaust gas is supplied and one or more ejection portions for ejecting the liquid that are provided within the reactor tower, wherein the top portion of the ejection portion has one or more grooves or one or more protrusions. One or more grooves may be provided to extend from one end to another end of the top portion of the ejection portion.

## Description

### BACKGROUND

### 1. TECHNICAL FIELD

The present invention relates to an exhaust gas treatment apparatus and a scrubber nozzle.

### 2. RELATED ART

Conventionally, there is known an exhaust gas treatment apparatus where a spray nozzle for spraying liquid is provided such that an angle formed by the center line of the spraying region of the spray nozzle and the longitudinal direction of the branch tube is an acute angle (for example, see Patent document 1)

Patent document 1: Japanese Patent No. 5998915

### Problems to be Solved

In an exhaust gas treatment apparatus, it is preferable that the orientation with which a nozzle sprays liquid can be accurately and easily set.

A first aspect of the present invention provides an exhaust gas treatment apparatus. The exhaust gas treatment apparatus includes a reactor tower to which an exhaust gas is fed and to which a liquid for treating the exhaust gas is supplied, and one or more ejection portions that are provided within the reactor tower and eject the liquid. The top portion of the ejection portion has one or more grooves or one or more protrusions.

The ejection portion may have an ejection plane provided in the direction which crosses the top portion. The ejection portion may eject liquid from the ejection plane.

One or more grooves may be provided to extend from one end to another end of the top portion of the ejection portion.

The exhaust gas treatment apparatus may further include branch tubes through which the liquid is supplied. The branch tubes may extend in the directions that cross the central axis from the feeding side toward the discharging side of the exhaust gas in the reactor tower. A plurality of ejection portions may be connected to one branch tube. One groove of one ejection portion and one groove of another ejection portion may extend in the direction in which one branch tube extends.

The acute angle formed by the direction in which one ejection portion ejects the liquid from the ejection plane and one groove of the one ejection portion may be equal to the acute angle formed by the direction in which another ejection portion ejects the liquid from the ejection plane and one groove of another ejection portion.

The angle formed in the direction of the central axis by the direction in which one ejection portion ejects the liquid from the ejection plane and the extending direction of one branch tube may be equal to the angle formed in the direction of the central axis by the direction in which another ejection portion ejects the liquid from the ejection plane and the extending direction of one branch tube.

The acute angle formed by the direction in which one ejection portion ejects the liquid from the ejection plane and one groove of the one ejection portion may be different from the acute angle formed by the direction in which the another ejection portion ejects the liquid from the ejection plane and one groove of another ejection portion.

The angle formed on the side of the central axis by the direction in which the one ejection portion ejects the liquid from the ejection plane and the extending direction of one branch tube may be different from the angle formed on the side of the central axis by the direction in which another ejection portion ejects the liquid from the ejection plane and the extending direction of one branch tube.

The angle formed by one groove and another groove in one ejection portion may be different from the angle formed by one groove and another groove in another ejection portion.

A second aspect of the present invention provides an exhaust gas treatment apparatus. The exhaust gas treatment apparatus includes a reactor tower to which an exhaust gas is fed and a liquid for treating the exhaust gas is supplied, one or more ejection portions that are provided within the reactor tower and eject the liquid, and branch tubes that are provided within the reactor tower and to which the liquid is supplied. The ejection portion has a top portion and an ejection plane provided in the direction that crosses the top portion. The ejection portion ejects the liquid from the ejection plane. The top portion has one or more grooves. The plurality of ejection portions is connected to one branch tube. The angle formed by one groove and another groove in one ejection portion is different from the angle formed by one groove and another groove in another ejection portion.

One groove of one ejection portion and one groove of another ejection portion may extend in the same straight line.

One groove and another groove in the top portion of one ejection portion may be provided such that the angles relative to the branch tube is different from each other.

In one ejection portion, the angle formed by one groove and another groove may be more than 0° and less than 90° or may be more than 90° and less than 180°.

The bottom plane of the groove may tilt relative to the horizontal direction.

The side plane of the groove may have a straight portion in the top view of the ejection portion.

The exhaust gas treatment apparatus may further include branch tubes that are provided within the reactor tower and to which the liquid is supplied. A plurality of ejection portions may be connected to one branch tube. A protrusion may have a plurality of side planes whose angles relative to the branch tube are different from each other. The branch tube may extend in the directions that cross the central axis that is in the direction from the feeding side to the discharging side of the exhaust gas in the reactor tower. One side plane of one ejection portion and the ejection plane of one ejection portion may be parallel or one side plane of another ejection portion and the ejection plane of another ejection portion may be parallel. The acute angle formed by the direction in which one ejection portion ejects the liquid from the ejection plane and the extending direction of one branch tube may be equal to the acute angle formed by the direction in which another ejection portion ejects the liquid from the ejection plane and the extending direction of one branch tube.

The angle formed in the direction of the central axis by the direction in which one ejection portion ejects the liquid from the ejection plane and the extending direction of one branch tube may be equal to the angle formed in the direction of the central axis by the direction in which another ejection portion ejects the liquid from the ejection plane and the extending direction of one branch tube.

The angle formed in the direction of the central axis by the direction in which one ejection portion ejects the liquid from the ejection plane and the extending direction of one branch tube may be different from the angle formed in the direction of the central axis by the direction in which another ejection portion ejects the liquid from the ejection plane and the extending direction of one branch tube.

A third aspect of the present invention provides an exhaust gas treatment apparatus. The exhaust gas treatment apparatus includes a plurality of ejection portions that is provided within a reactor tower and ejects the liquid and a branch tube that is provided within the reactor tower and to which the liquid is supplied. The ejection portion has a top portion and an ejection plane provided in the direction that crosses the top portion. The ejection portion ejects the liquid from the ejection plane. The top portion has one or more protrusions. A plurality of ejection portions is connected to one branch tube. The protrusion has a plurality of side planes whose angles relative to the branch tube are different from each other. The branch tube extends in the directions that cross the central axis in the direction from the feeding side to the discharging side of the exhaust gas in the reactor tower. One side plane of one ejection portion and one side plane of another ejection portion extend in the direction that is orthogonal to the extending direction of one branch tube. The acute angle formed by one side plane of one ejection portion and the extending direction of one branch tube is equal to the acute angle formed by one side plane of another ejection portion and the extending direction of one branch tube. The angle formed in the direction of the central axis by the direction in which one ejection portion ejects the liquid from the ejection plane and one side plane of one ejection portion is different from the angle formed in the direction of the central axis by the direction in which another ejection portion ejects the liquid from the ejection plane and one side plane of another ejection portion.

The direction connecting the apex of one protrusion of one ejection portion and the apex of one protrusion of another ejection portion may be parallel to the extending direction of one branch tube.

A fourth aspect of the present invention provides an exhaust gas treatment apparatus. The exhaust gas treatment apparatus includes a reactor tower to which an exhaust gas is fed and a liquid for treating the exhaust gas is supplied, one or more ejection portions that is provided within the reactor tower and eject the liquid, and a branch tube that is provided within the reactor tower and to which the liquid is supplied. The branch tube extends in the directions that cross the central axis, which is in the direction from the feeding side to the discharging side of the exhaust gas in the reactor tower. A plurality of ejection portions is connected to one branch tube. The ejection portion has an ejection plane for ejecting the liquid and one or more side planes,

One side plane of one ejection portion and one side plane of another ejection portion extend in the extending direction of one branch tube.

One or more side planes may be the plane of the outline of the ejection portion in the top view of the ejection portion.

One side plane of one ejection portion, wherein the one side plane is arranged in the position that overlaps the ejection plane when seen from the direction in which the liquid is ejected from the ejection plane of the one ejection portion, and one side plane of another ejection portion, wherein the one side plane is arranged in the position that overlaps the ejection plane when seen from the direction in which the liquid is ejected from the ejection plane of another ejection portion, may extend in the extending direction of one branch tube. The acute angle formed by the direction in which one ejection portion ejects the liquid from the ejection plane and one side plane of the one ejection portion may be equal to the acute angle formed by the direction in which another ejection portion ejects the liquid from the ejection plane and one side plane of the another ejection portion.

The angle formed on the side of the central axis by the direction in which one ejection portion ejects the liquid from the ejection plane and one side plane of one ejection portion may be equal to the angle formed on the side of the central axis by the direction in which another ejection portion ejects the liquid from the ejection plane and one side plane of another ejection portion.

The angle formed on the side of the central axis by the direction in which one ejection portion ejects the liquid from the ejection plane and one side plane of one ejection portion may be different from the angle formed on the side of the central axis by the direction in which another ejection portion ejects the liquid from the ejection plane and one side plane of another ejection portion.

One side plane of one ejection portion and one side plane of another ejection portion may extend on the same straight line.

In one ejection portion, the angle formed by the ejection plane and one side plane may be more than 0° and less than 45° or may be more than 45° and less than 90°.

One side plane and another side plane may cross each other in the top view of the ejection portion.

One ejection portion may have one side plane, another side plane, and yet another side plane. One side plane and another side plane may have a straight portion in the top view of the ejection portion. The yet another side plane may be curved in the top view.

In the direction in which the liquid is ejected from the ejection plane of the ejection portion, the ejection plane and the yet another side plane may be opposite to each other.

A fifth aspect of the present invention provides a scrubber nozzle. The scrubber nozzle includes one or more grooves on the top portion of the scrubber nozzle for ejecting the liquid or one or more protrusions.

The one or more grooves may be provided to extend from one end to another end of the top portion of the scrubber nozzle.

The angle formed by one groove and another groove may be more than 0° and less than 90° or may be more than 90° and less than 180°.

The bottom plane of the groove may tilt relative to the horizontal direction.

The side plane of the groove may have a straight portion in the top view of the scrubber nozzle.

A sixth aspect of the present invention provides an exhaust gas treatment apparatus. The exhaust gas treatment apparatus includes a scrubber nozzle in the fifth aspect of the present invention.

The summary clause does not necessarily describe all necessary features of the embodiments of the present invention. The present invention may also be a sub-combination of the features described above.

### BRIEF DESCRIPTION OF THE DRAWINGS

Fig. 1 is a figure showing one example of an exhaust gas treating system 400 according to one embodiment of the present invention.
Fig. 2 is a figure showing one example of the top view of the exhaust gas treatment apparatus 100 shown in Fig. 1.
Fig. 3 is a figure showing another one example of the exhaust gas treating system 400 according to one embodiment of the present invention.
Fig. 4 is a figure showing one example of the top view of the exhaust gas treatment apparatus 100 shown in Fig. 3.
Fig. 5 is a figure showing one example in the top view of the ejection portion 14.
Fig. 6 is a figure showing one example in the front view of the ejection portion 14.
Fig. 7 is a figure showing one example in the side view of the ejection portion 14.
Fig. 8 is a figure showing one example of the arrangement of a plurality of ejection portions 14 connected to one branch tube 13.
Fig. 9 is a figure showing a comparative example of the arrangement of the plurality of ejection portions 14 connected to one branch tube 13.
Fig. 10 is a figure showing of another one example of the arrangement of the plurality of ejection portions 14 connected to one branch tube 13.
Fig. 11 is a figure showing another one example of the arrangement of the plurality of ejection portions 14 connected to one branch tube 13.
Fig. 12 is a figure of the side view of the ejection portion 114 in the comparative example.
Fig. 13 is a figure showing the front view of the ejection portion 114 in Fig. 12.
Fig. 14 is a figure showing the side view of the ejection portion 114 in Fig. 12.
Fig. 15 is a figure showing another one example in the front view of the ejection portion 14.
Fig. 16 is a figure showing another one example in the top view of the ejection portion 14.
Fig. 17 is a figure showing another one example in the front view of the ejection portion 14.
Fig. 18 is a figure showing one example of the arrangement of the plurality of ejection portions 14 connected to one branch tube 13.
Fig. 19 is a figure showing the fixture 210 for determining the directions of the plurality of ejection portions 14-11 that is aligned with Fig. 18.
Fig. 20 is a figure showing the enlarged view of one ejection portion 14-11B and the fixture 210 in Fig. 19.
Fig. 21 is a figure showing another one example of the arrangement of the plurality of ejection portions 14 connected to one branch tube 13.
Fig. 22 is a figure showing the fixture 210 for determining the directions of the plurality of ejection portions 14-11 that is aligned with Fig. 21.
Fig. 23 is a figure showing another one example in the top view of the ejection portion 14.
Fig. 24 is a figure showing another one example in the side view of the ejection portion 14.
Fig. 25 is a figure showing one example of the arrangement of the plurality of ejection portions 14 connected to one branch tube 13.
Fig. 26 is a figure showing another one example of the arrangement of the plurality of the ejection portions 14 connected to one branch tube 13.
Fig. 27 is a figure showing a perspective view of the exhaust gas treatment apparatus 100 according to one embodiment of the present invention.
Fig. 28 is a figure showing a perspective view of the exhaust gas treatment apparatus 300 in a comparative example.

### DESCRIPTION OF EXEMPLARY EMBODIMENTS

Hereinafter, the present invention will be described through embodiments of the invention. However, the following embodiments do not limit the invention defined in the claims. In addition, not all combinations of features described in the embodiments necessarily have to be essential to solving means of the invention.

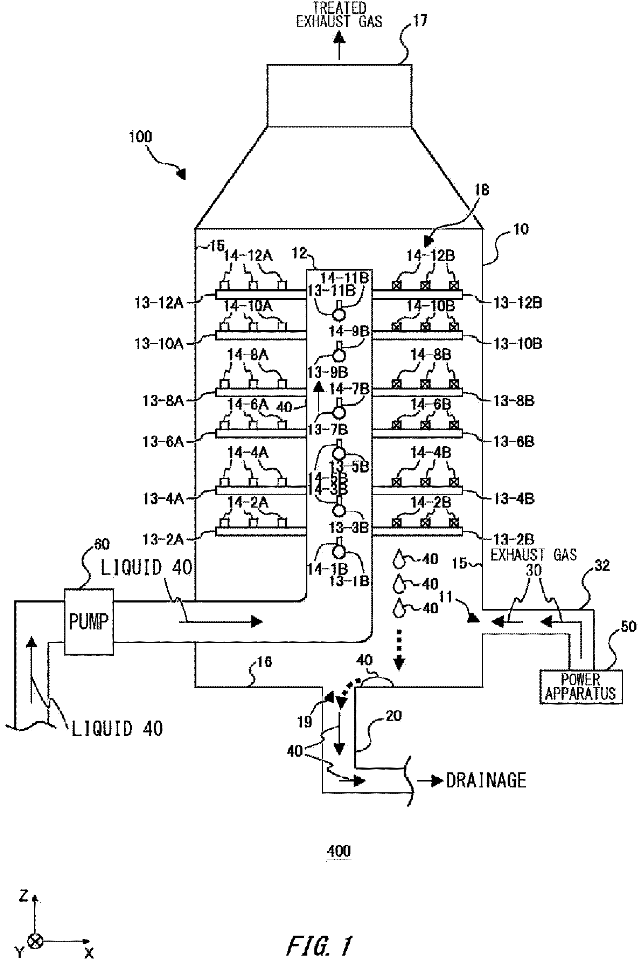

Fig. 1 is a figure showing one example of the exhaust gas treating system 400 according to one embodiment of the present invention. The exhaust gas treating system 400 includes an exhaust gas treatment apparatus 100 and a power apparatus 50. The power apparatus 50 is, for example, an engine, a boiler, or the like.

In Fig. 1, there is shown one example of the exhaust gas treatment apparatus 100. The exhaust gas treatment apparatus 100 includes a reactor tower 10 and one or more ejection portions 14. The ejection portion 14 is, for example, a scrubber nozzle. The ejection portion 14 is provided within the reactor tower 10.

The exhaust gas treatment apparatus 100 may include an exhaust gas feed tube 32, a drain pipe 20, and a pump 60. The exhaust gas feed tube 32 connects the power apparatus 50 to the reactor tower 10.

The reactor tower 10 is fed with an exhaust gas 30. In the present example, the exhaust gas 30 is discharged from the power apparatus 50. The exhaust gas 30 has a predetermined heat. In the present example, the exhaust gas 30 discharged from the power apparatus 50 is fed through the exhaust gas feed tube 32 to the reactor tower 10.

The pump 60 supplies a liquid 40 to the reactor tower 10. The liquid 40 is, for example, sea water as described later. The ejection portion 14 ejects the liquid 40. The liquid 40 ejected from the ejection portion 14 is used to treat the exhaust gas 30. Treating the exhaust gas 30 means removing harmful substances, which is described later, included in the exhaust gas 30.

The exhaust gas treatment apparatus 100 is, for example, a scrubber for ships. If the exhaust gas treatment apparatus 100 is a scrubber for ships, the scrubber may be a cyclone scrubber. The cyclone scrubber will be described later in detail. If the exhaust gas treatment apparatus 100 is a scrubber of ships, the power apparatus 50 is, for example, an engine, a boiler, or the like for the ships, the exhaust gas 30 is, for example, the exhaust gas discharged from the power apparatus 50, and the liquid 40 for treating the exhaust gas 30 is, for example, sea water. The liquid 40 may be an alkaline solution added with at least one of sodium hydroxide (NaOH) and sodium hydrogen carbonate (Na₂CO₃).

The exhaust gas 30 includes harmful substances such as a sulfur oxide (SOₓ). The sulfur oxide (SOₓ) is, for example, sulfurous acid gas (SO₂). In the present example, the liquid 40 is used to remove the harmful substances included in the exhaust gas 30.

The reactor tower 10 in the present example has a side wall 15, a bottom plane 16, a gas outlet 17, and a gas treatment portion 18. The reactor tower 10 in the present example has a cylindrical shape. In the present example, the side wall 15 and the bottom plane 16 are an inner side plane and bottom plane of the cylindrical reactor tower 10, respectively.

In the present example, the gas treatment portion 18 is a space surrounded by the side wall 15, the bottom plane 16, and the gas outlet 17. The exhaust gas 30 fed to the reactor tower 10 is treated with the liquid 40 in the gas treatment portion 18. The inner wall of the gas treatment portion 18 is formed of a material that has durability against the exhaust gas 30 and the liquid 40 (for example, sea water or an alkaline liquid). The material may be an iron material such as SS 400, a copper alloy such as naval brass, an aluminum alloy such as aluminum brass, a nickel alloy such as cupronickel, or a stainless steel such as SUS316L.

The exhaust gas 30 treated with the liquid 40 is discharged from the gas outlet 17. In the present example, the liquid 40 used for treating the exhaust gas 30 remains on the bottom plane 16. The liquid 40 is discharged from the liquid outlet 19. The liquid outlet 19 may be provided at the bottom plane 16. The liquid outlet 19 may also be provided on the side wall 15 near the bottom plane 16.

Herein, the technical matter may be described using the orthogonal coordinate axes consisting of X axis, Y axis, and Z axis. Herein, the plane parallel to the bottom plane 16 of the reactor tower 10 is referred to as the XY plane, and the direction from the bottom plane 16 toward the gas outlet 17 (the direction perpendicular to the bottom plane 16) is referred to as the Z axis. Herein, a predetermined direction in the XY plane is referred to as the X axis direction, and the direction orthogonal to the X axis in the XY plane is referred to as the Y axis direction.

Herein, the side of the gas outlet 17 is referred to as "upper" and the side of the bottom plane 16 is referred to as "lower". Although in the present example the Z axis direction is the gravitational direction, the direction of the "upper" and "lower" is not limited to the gravitational direction. Herein, the top view means the view of the exhaust gas treatment apparatus 100 seen from the gas outlet 17 toward the bottom plane 16 in the Z axis direction.

In the present example, the bottom plane 16 (XY plane) may be a horizontal plane, and the direction perpendicular to the bottom plane 16 (the Z axis direction) may be the height direction. If the exhaust gas treatment apparatus 100 may be placed in ships or the like, the bottom plane 16 is mounted to the ships or the like.

In the present example, the reactor tower 10 has a gas feed opening 11 for feeding the exhaust gas 30. In the present example, the exhaust gas 30 is fed from the outside of the reactor tower 10 through the gas feed opening 11 to the gas treatment portion 18. The gas feed opening 11 may be provided on the side wall 15.

In the present example, the exhaust gas treatment apparatus 100 further includes a trunk tube 12 and branch tubes 13. The trunk tube 12 and the branch tubes 13 are provided within the reactor tower 10 (in the gas treatment portion 18). In the present example, the trunk tube 12 extends in the direction (the Z axis direction) from the feeding side (the side of the bottom plane 16) toward the discharging side (the side of the gas outlet 17) of the exhaust gas 30.

The branch tubes 13 are connected to the trunk tube 12. The branch tubes 13 extend in the directions away from the trunk tube 12. That the branch tubes 13 extend in the direction away from the trunk tube 12 means that, in at least a part of the branch tube 13 in the extending direction of the branch tube 13, the distance between any position on the branch tube 13 and the trunk tube 12 increases as the position is closer to the end portion EN, which is described later, of the branch tubes 13. The branch tubes 13 may extend in the direction that is not parallel to the trunk tube 12. The branch tubes 13 may extend in the direction that crosses the trunk tube 12. In the present example, the branch tubes 13 extend in the direction (the X axis direction or the Y axis direction) orthogonal to the Z axis direction. The ejection portion 14 is connected to the branch tubes 13.

The trunk tube 12 is supplied with the liquid 40. In the present example, the trunk tube 12 is supplied with the liquid 40 by the pump 60 from the outside of the reactor tower 10. The liquid 40 supplied to the trunk tube 12 flows within the trunk tube 12 in the Z axis direction from the bottom plane 16 toward the side of the gas outlet 17. In the present example, the liquid 40 flowing within the trunk tube 12 is supplied to the branch tubes 13. In the present example, the liquid 40 flowing within the branch tubes 13 is ejected from the ejection portions 14 to the gas treatment portion 18. The liquid 40 ejected from the ejection portion 14 is used to treat the exhaust gas 30.

In the present example, the trunk tube 12 and the branch tube 13 are formed of a material that has durability against the exhaust gas 30 and the liquid 40 (for example, sea water or an alkaline liquid). The material is, for example, an iron material such as SS 400, a copper alloy such as naval brass, an aluminum alloy such as aluminum brass, a nickel alloy such as cupronickel, or a stainless steel such as SUS316L.

If the liquid 40 is a sodium hydroxide (NaOH) solution, the reaction between the sulfurous acid gas (SO₂) included in the exhaust gas 30 and the sodium hydroxide (NaOH) is described as the following chemical formula 1.

[CHEMICAL FORMULA 1] SO₂ + Na⁺ + OH⁻ → Na + HSO₃⁻

As shown in the chemical formula 1, the sulfurous acid gas (SO₂) changes to the sulfite ion (HSO₃⁻) through a chemical reaction. The sulfite ion (HSO₃⁻) is included in the liquid 40 after the chemical reaction shown in the chemical formula 1. The liquid 40 may be discharged from the drain pipe 20 to the outside of the exhaust gas treatment apparatus 100.

The exhaust gas treatment apparatus 100 may have a plurality of branch tubes 13. In the present example, the exhaust gas treatment apparatus 100 has twelve branch tubes 13. In the present example, the branch tube 13-1 is the branch tube 13 that is provided to be closest to the side of the bottom plane 16 and the branch tube 13-12 is the branch tube 13 that is provided to be closest to the side of the gas outlet 17. In the present example, the branch tube 13-2, the branch tube 13-4, the branch tube 13-6, the branch tube 13-8, the branch tube 13-10, and the branch tube 13-12 extend in the X axis direction, and the branch tube 13-1, the branch tube 13-3, the branch tube 13-5, the branch tube 13-7, the branch tube 13-9, and the branch tube 13-11 extend in the Y axis direction.

The branch tube 13-2, the branch tube 13-4, the branch tube 13-6, the branch tube 13-8, the branch tube 13-10, and the branch tube 13-12 may be arranged on the both sides of the trunk tube 12 in the X axis direction. For the branch tube 13-2 as an illustrative example, the branch tube 13-2A and the branch tube 13-2B are the branch tubes 13-2 on one side and the other side of the trunk tube 12, respectively, in the X axis direction. In the X axis direction, the branch tube 13-2A and the branch tube 13-2B may be provided to sandwich the trunk tube 12.

The branch tube 13-1, the branch tube 13-3, the branch tube 13-5, the branch tube 13-7, the branch tube 13-9, and the branch tube 13-11 may be arranged on the both sides of the trunk tube 12 in the Y axis direction. For the branch tube 13-1 as an illustrative example, the branch tube 13-1A and the branch tube 13-1B are the branch tubes 13-1 that are on one side and the other side, respectively, of the trunk tube 12 in the Y axis direction. In the Y axis direction, the branch tube 13-1A and the branch tube 13-1B may be provided to sandwich the trunk tube 12. Notably, since the branch tube 13-1A, the branch tube 13-3A, the branch tube 13-5A, the branch tube 13-7A, the branch tube 13-9A, and the branch tube 13-11A are arranged in the positions that overlap the trunk tube 12 in Fig. 1, they are not illustrated.

The exhaust gas treatment apparatus 100 may have a plurality of ejection portions 14. In the present example, the ejection portion 14-1 is arranged to be closest to the side of the feeding side of the exhaust gas 30 in the direction (the Z axis direction) from the feeding side (the side of the bottom plane 16) toward the discharging side (the side of the gas outlet 17) of the exhaust gas 30 in the reactor tower 10. In the present example, the ejection portion 14-12 is arranged to be closest to the side of the discharging side of the exhaust gas 30 in the direction (the Z axis direction).

In the present example, three ejection portions 14-2A, three ejection portions 14-4A, three ejection portions 14-6A, three ejection portions 14-8A, three ejection portions 14-10A, and three ejection portions 14-12A are provided on the branch tube 13-2A, the branch tube 13-4A, the branch tube 13-6A, the branch tube 13-8A, the branch tube 13-10A, and the branch tube 13-12A, respectively. In the present example, three ejection portions 14-2B, three ejection portions 14-4B, three ejection portions 14-6B, three ejection portions 14-8B, three ejection portions 14-10B, three ejection portions 14-12B are provided on the branch tube 13-2B, the branch tube 13-4B, the branch tube 13-6B, the branch tube 13-8B, the branch tube 13-10B, and the branch tube 13-12B, respectively.

In the present example, three ejection portions 14-1A, three ejection portions 14-3A, three ejection portions 14-5A, three ejection portions 14-7A, three ejection portions 14-9A, and three ejection portions 14-11A are provided on the branch tube 13-1A, the branch tube 13-3A, the branch tube 13-5A, the branch tube 13-7A, the branch tube 13-9A, and the branch tube 13-11A, respectively. In the present example, three ejection portions 14-1B, three ejection portions 14-3B, three ejection portions 14-5B, three ejection portions 14-7B, three ejection portions 14-9B, and three ejection portions 14-11B are provided on the branch tube 13-1B, the branch tube 13-3B, the branch tube 13-5B, branch tube 13-7B, the branch tube 13-9B, and the branch tube 13-11B, respectively. Notably, since in Fig. 1 the ejection portion 14-1A, the ejection portion 14-3A, the ejection portion 14-5A, the ejection portion 14-7A, the ejection portion 14-9A, and the ejection portion 14-11A are arranged at the positions that overlap the trunk tube 12, they are not illustrated.

The ejection portion 14 has an ejection plane for ejecting the liquid 40. The ejection plane will be described later. In Fig. 1, the ejection plane is indicated with the symbol of X. In the present example, the direction of the ejection plane and the extending direction of the branch tube 13 form a predetermined angle. The direction of the ejection plane means the normal direction of the ejection plane. In the present example, the liquid 40 is ejected from the ejection plane in the direction that forms a predetermined angle with the extending direction of the branch tube 13. The predetermined angle will be described later.

For the branch tube 13-1 as the illustrative example, the ejection plane of each of the ejection portion 14-1A and the ejection portion 14-1B may be oriented in one direction and the other direction that form a predetermined angle with the extending direction of the branch tube 13-1 (the Y axis direction). The same applies to each ejection plane of the ejection portion 14-3, the ejection portion 14-5, the ejection portion 14-7, the ejection portion 14-9, and the ejection portion 14-11.

For the branch tube 13-2 as the illustrative example, each ejection plane of the ejection portion 14-2A and the ejection portion 14-2B may be oriented in one direction and the other direction that form a predetermined angle with the extending direction of the branch tube 13-2 (the X axis direction). The same applies to each ejection plane of the ejection portion 14-4, the ejection portion 14-6, the ejection portion 14-8, the ejection portion 14-10, and the ejection portion 14-12.

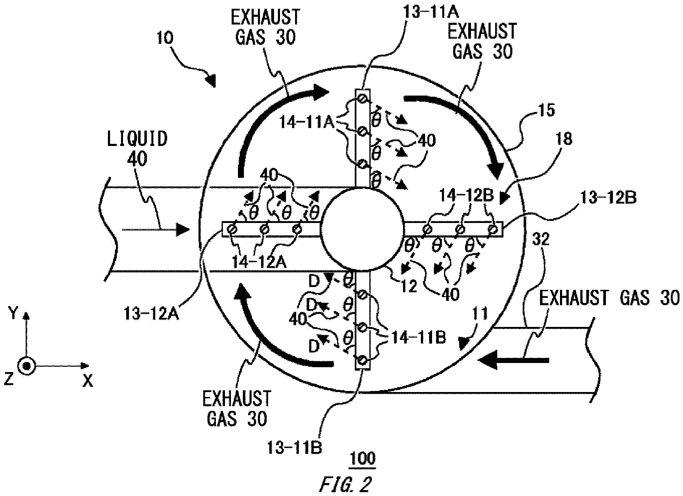

Fig. 2 is a figure showing one example of the top view of the exhaust gas treatment apparatus 100 shown in Fig. 1. In Fig. 2, the power apparatus 50, the pump 60, and the gas outlet 17 are not shown. Fig. 2 is one example of the top view inside the reactor tower 10.

The reactor tower 10 of the present example has a circular shape when seen in the top view. Within the reactor tower 10, the trunk tube 12 is provided. The trunk tube 12 in the present example has a cylindrical shape with the central axis in the Z axis direction. The central axis of the trunk tube 12 may be the same as the central axis of the reactor tower 10. In other words, the trunk tube 12 and the reactor tower 10 may be arranged concentrically in the top view.

The exhaust gas treatment apparatus 100 may be a cyclone scrubber in which the exhaust gas 30 proceeds in a spiral pattern within the reactor tower 10 from the feeding side to the discharging side of the exhaust gas 30 in the reactor tower 10. The exhaust gas feed tube 32 is connected to the side wall 15 of the reactor tower 10. In the top view, the exhaust gas feed tube 32 may be provided in a position such that the extended line in the extending direction of the exhaust gas feed tube 32 does not overlap the center of the reactor tower 10. The extending direction of the exhaust gas feed tube 32 means the progression direction of the exhaust gas 30 passing through the gas feed opening 11. The exhaust gas feed tube 32 provided in such a position causes the exhaust gas 30 to turn in a spiral pattern (a cyclone pattern) in the gas treatment portion 18 and proceed from the feeding side (side of the bottom plane 16) to the discharging side (the side of the gas outlet 17) of the exhaust gas 30.

The liquid 40 supplied from the outside of the reactor tower 10 to the trunk tube 12 flows within the trunk tube 12 in the Z axis direction from the side of the bottom plane 16 toward the side of the gas outlet 17. The liquid 40 flowing within the trunk tube 12 is supplied to the branch tube 13-1 - the branch tube 13-12. The liquid 40 flowing within the branch tube 13-1 - the branch tube 13-12 is ejected from the ejection portion 14-1 - the ejection portion 14-12, respectively to the gas treatment portion 18. In Fig. 2, the directions in which the liquid 40 is ejected from the ejection portions 14 to the gas treatment portion 18 are indicated with dashed arrows.

As described above, the ejection portion 14 in the present example ejects the liquid 40 in the direction that forms a predetermined angle with the extending direction of the branch tube 13. In Fig. 2, the predetermined angle is indicated with θ. In other words, in the present example, the direction in which the liquid 40 is ejected from the ejection portion 14-11 and the extending direction of the branch tube 13-11 (the Y axis direction) form the angle θ. In addition, in the present example, the direction in which the liquid 40 is ejected from the ejection portion 14-12 and the extending direction of the branch tube 13-12 (the X axis direction) form the angle θ. In addition, in Fig. 2, the direction in which the liquid 40 is ejected from the ejection portion 14-11B is indicated with D.

In the present example, the direction in which the liquid 40 is ejected from the ejection portion 14-11A is one direction in the direction that forms the angle θ with the extending direction of the branch tube 13-11, and the direction in which the liquid 40 is ejected from the ejection portion 14-11B is the other direction in the direction that forms the angle θ with the extending direction of the branch tube 13-11. The direction in which the liquid 40 is ejected from the ejection portion 14-1A, the ejection portion 14-3A, the ejection portion 14-5A, the ejection portion 14-7A, and the ejection portion 14-9A may be the one direction. The direction in which the liquid 40 is ejected from the ejection portion 14-1B, the ejection portion 14-3B, the ejection portion 14-5B, the ejection portion 14-7B, and the ejection portion 14-9B may also be the other direction.

In the present example, the direction in which the liquid 40 is ejected from the ejection portion 14-12A is one direction in the direction that forms the angle θ with the extending direction of the branch tube 13-12, and the direction in which the liquid 40 is ejected from the ejection portion 14-12B is the other direction in the direction that forms the angle θ with the extending direction of the branch tube 13-12. The direction in which the liquid 40 is ejected from the ejection portion 14-2A, the ejection portion 14-4A, the ejection portion 14-6A, the ejection portion 14-8A, and the ejection portion 14-10A may also be the one direction. The direction in which the liquid 40 is ejected from the ejection portion 14-2B, the ejection portion 14-4B, the ejection portion 14-6B, the ejection portion 14-8B, and the ejection portion 14-10B may also be the other direction.

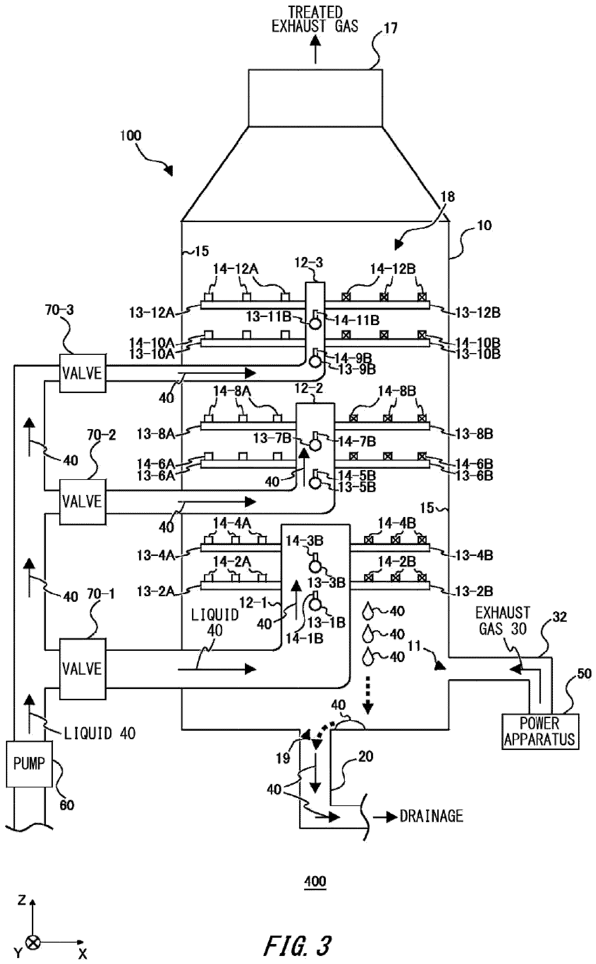

Fig. 3 is a figure showing another one example of the exhaust gas treating system 400 according to one embodiment of the present invention. The exhaust gas treating system 400 includes the exhaust gas treatment apparatus 100 and the power apparatus 50. The exhaust gas treatment apparatus 100 in the present example is different from the exhaust gas treatment apparatus 100 shown in Fig. 1 in that it includes three trunk tubes 12 (a trunk tube 12-1, a trunk tube 12-2, and a trunk tube 12-3). In addition, the exhaust gas treatment apparatus 100 in the present example is different from the exhaust gas treatment apparatus 100 shown in Fig. 1 in that it includes three valves 70 (the valve 70-1, the valve 70-2, and the valve 70-3).

In the present example, the trunk tube 12-1 and the trunk tube 12-3 are arranged to be closest to the side of the bottom plane 16 and closest to the side of the gas outlet 17, respectively, in the Z axis direction. The trunk tube 12-2 is arranged between the trunk tube 12-1 and the trunk tube 12-3 in the Z axis direction. The pump 60 supplies the liquid 40 to the trunk tube 12-1, the trunk tube 12-2, and the trunk tube 12-3. The valve 70-1, the valve 70-2, and the valve 70-3 adjust the amount of the liquid 40 to be supplied to the trunk tube 12-1, the trunk tube 12-2, and the trunk tube 12-3, respectively, from the pump 60.

In the direction (in the XY plane) orthogonal to the extending direction (the Z axis direction) of the trunk tube 12, the cross-sectional area of the trunk tube 12-1 may be larger than the cross-sectional area of the trunk tube 12-2, and the cross-sectional area of the trunk tube 12-2 may be larger than the cross-sectional area of the trunk tube 12-3. In the present example, the branch tube 13-1 - the branch tube 13-4 are fastened to the trunk tube 12-1, the branch tube 13-5 - the branch tube 13-8 are fastened to the trunk tube 12-2, and the branch tube 13-9 - the branch tube 13-12 are fastened to the trunk tube 12-3.

The liquid 40 supplied to the trunk tube 12 flows in the Z axis direction from the bottom plane 16 toward the gas outlet 17 through the inside of each of the trunk tube 12-1, the trunk tube 12-2, and the trunk tube 12-3. The liquid 40 flowing through the inside of the trunk tube 12-1 flows through the branch tube 13-1 - the branch tube 13-4 and is ejected from the ejection portion 14-1 - the ejection portion 14-4, respectively, to the gas treatment portion 18. The liquid 40 flowing through the inside of the trunk tube 12-2 flows through the branch tube 13-5 - the branch tube 13-8 and is ejected from the ejection portion 14-5 - the ejection portion 14-8, respectively, to the gas treatment portion 18. The liquid 40 flowing through the inside of the trunk tube 12-3 flows through the branch tube 13-9 - the branch tube 13-12 and is ejected from the ejection portion 14-9 - the ejection portion 14-12, respectively, to the gas treatment portion 18.

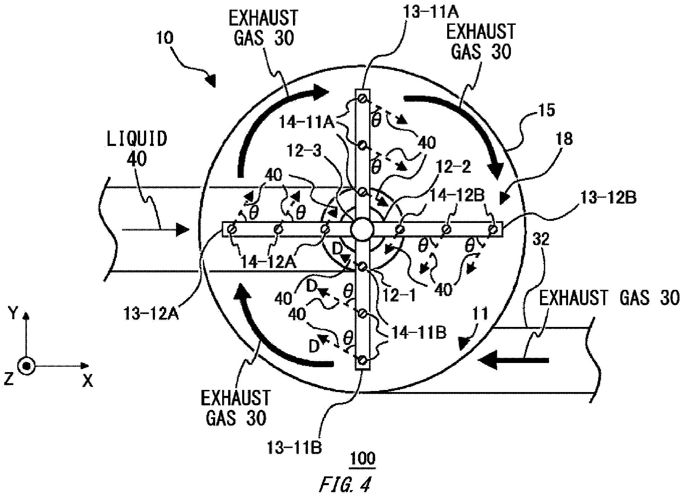

Fig. 4 is a figure showing one example of the top view of the exhaust gas treatment apparatus 100 shown in Fig. 3. In Fig. 4, the power apparatus 50, the pump 60, and the gas outlet 17 are not shown. Fig. 4 is one example of the top view inside the reactor tower 10.

Within the reactor tower 10, the trunk tube 12-1, the trunk tube 12-2, and the trunk tube 12-3 are provided. The trunk tube 12-1, the trunk tube 12-2, and the trunk tube 12-3 may have a cylindrical shape with the central axis in the Z axis direction. In the XY plane, the position of the central axis of the trunk tube 12-1, the trunk tube 12-2, and the trunk tube 12-3 may be the same as the position of the central axis of the reactor tower 10. In other words, the trunk tube 12-1, the trunk tube 12-2, and the trunk tube 12-3, and the reactor tower 10 may be arranged concentrically in the top view. In the present example, the trunk tube 12-2 is arranged below the trunk tube 12-3, and the trunk tube 12-1 is arranged below the trunk tube 12-2.

In the XY plane, the cross-sectional area of the trunk tube 12 at the feeding side of the exhaust gas 30 may be larger than the cross-sectional area of the trunk tube 12 at the discharging side of the exhaust gas 30. In the present example, the cross-sectional area of the trunk tube 12-1 is larger than the cross-sectional area of the trunk tube 12-2, and the cross-sectional area of the trunk tube 12-2 is larger than the cross-sectional area of the trunk tube 12-3.

The liquid 40 supplied by the pump 60 from the outside of the reactor tower 10 to the trunk tube 12-1, the trunk tube 12-2, and the trunk tube 12-3 flows in the Z axis direction from the side of the bottom plane 16 to the side of the gas outlet 17, through the inside of the trunk tube 12-1, the trunk tube 12-2, and the trunk tube 12-3, respectively. The liquid 40 flowing through the inside of the trunk tube 12-1 is ejected from the ejection portion 14-1, ... and the ejection portion 14-4 to the gas treatment portion 18. The liquid 40 flowing through the inside of the trunk tube 12-2 is ejected from the ejection portion 14-5, ... and the ejection portion 14-8 to the gas treatment portion 18. The liquid 40 flowing through the inside of the trunk tube 12-3 is ejected from the ejection portion 14-9, ... and the ejection portion 14-12 to the gas treatment portion 18. In Fig. 4, the directions in which the liquid 40 is ejected from the ejection portion 14-11 and the ejection portion 14-12 to the gas treatment portion 18 are indicated with dashed arrows.

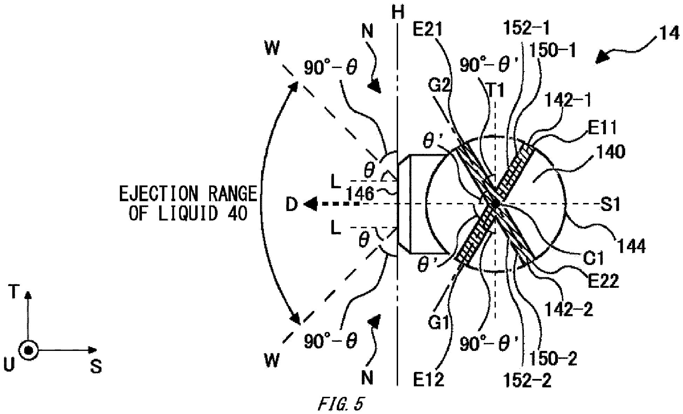

Fig. 5 is a figure showing one example of the top view of the ejection portion 14. The ejection portion 14 has a top portion 140, a groove 142, a side plane 144, and an ejection plane 146.

Herein, the technical matter may be described by using the orthogonal coordinate axes of the S axis, the T axis, and the U axis. The top portion 140 in the present example is the upper plane of the ejection portion 14. Herein, the plane that is parallel to the upper plane is referred to as the ST plane and the direction that is perpendicular to the upper plane is referred to as the U axis. In addition, herein, the direction that is perpendicular to the ejection plane 146 and is in the ST plane and the direction that is parallel to the ejection plane 146 and is in the ST plane are referred to as the S axis and the T axis, respectively. The ST plane may be parallel to the horizontal direction. The U axis may be parallel to the gravitational direction.

The ejection portion 14 in the present example ejects the liquid 40 from the ejection plane 146. The ejection portion 14 in the present example ejects the liquid 40 in a conical pattern. The central axis of the cone may be parallel to the S axis direction. Herein, the direction in which the ejection portion 14 ejects the liquid 40 means the direction of the central axis. In Fig, 5, the direction is indicated with D like in Fig. 2. The central axis may be in the ST plane, or may be in a direction forming a predetermined angle with the ST plane (namely, the direction tilted in the U axis direction). In Fig. 5, the outer edge of the range in which the liquid 40 is ejected is indicated with large dashed lines W.

The position of the ejection plane 146 in the S axis direction is referred to as the position H. In Fig. 5, the position H is indicated with a double-dot dashed line. In the top view in Fig. 5, the region between the large dashed line W and the double-dot dashed line is referred to as the region N. The region N will be described later.

The top portion 140 in the present example has a circular shape in the top view. The side plane 144 in the present example is the side plane of a cylinder extending in the direction that is perpendicular to the top portion 140 with a circular shape. The central axis of the cylinder may be parallel to the U axis direction. The ejection plane 146 may be provided in the direction that crosses the top portion 140. The ejection plane 146 in the present example is provided in the direction perpendicular to the top portion 140.

The center of the top portion 140 in the top view is referred to as C1. In Fig. 5, the straight line in the S axis direction and the straight line in the T axis direction which pass through the center C1 of the top portion 140 are indicated with the dashed line S1 and the dashed line T1, respectively. In addition, in Fig. 5, the straight lines which are parallel to the dashed line S1 and pass through the both ends of the ejection plane 146 in the T axis direction are indicated with the dashed lines L. Notably, the dashed line S1, the dashed line T1, and the dashed line L, and the dashed line U1, the dashed line S2, the dashed line T2, and the dashed line R1, which will be described later, are lines which are conveniently illustrated to describe the arrangement of the ejection portion 14 and are not the lines that actually exist.

In the ST plane, the angle θ formed between the large dashed line W and the dashed line L in the ejection range of the liquid 40 shown in Fig. 5 is equal to the angle θ shown in Fig. 2. The angle θ may be more than or equal to 40° and less than or equal to 80° or may be more than or equal to 50° and less than or equal to 70°. The angle θ is for example 60°.

The top portion 140 has the groove 142. The top portion 140 may have a plurality of grooves 142. The top portion 140 in the present example has two grooves 142 (a groove 142-1 and a groove 142-2). The groove 142 is the region that is concaved in the direction from the top portion 140 of the ejection portion 14 toward the lower plane 149, which will be described later. In Fig. 5, the bottom plane of the groove 142 is indicated with hatching. In the present example, the bottom plane of the groove 142 is parallel to the ST plane.

A plurality of grooves 142 may cross each other in the ST plane. The plurality of grooves 142 may cross each other at the center C1 of the top portion 140. The groove 142-1 and the groove 142-2 in the present example cross each other at the center C1.

The groove 142 extends in the direction that forms a predetermined angle θ' with the S axis direction. In Fig. 5, the extending direction of the groove 142-1 and the groove 142-2 are indicated with a dashed-and-dotted line G1 and a dashed-and-dotted line G2, respectively. The angle θ' may be equal to or may be different from the angle θ. The angle θ' may be larger than 0° and less than 90°. The angle θ' may be more than or equal to 40° and less than or equal to 80° or may be more than or equal to 50° and less than or equal to 70°. The angle θ' is, for example, 60°.

The groove 142 has a side plane 150. The side plane 150 is the plane that connects the bottom plane of the groove 142 to the top portion 140. The side plane 150 may be the plane perpendicular to the top portion 140 (the plane that is parallel to the U axis direction). In the present example, the side plane of the groove 142-1 and the side plane of the groove 142-2 are referred to as the side plane 150-1 and the side plane 150-2, respectively.

The side plane 150 of the groove 142 may have a straight portion 152 in the top view. In other words, at least a part of the side plane 150 may be straight in the top view. The straight portion 152 of the side plane 150 means the section in which the side plane 150 has a straight shape at the position of the top portion 140 in the U axis direction. In the present example, the side plane 150 is entirely straight in the top view.

The straight portion 152-1 and the straight portion 152-2 are the straight portions 152 of the side plane 150-1 and the side plane 150-2, respectively. The straight portion 152-1 and the straight portion 152-2 in the present example extend in the direction of the dashed-and-dotted line G1 and the dashed-and-dotted line G2, respectively, in the top view.

One end of the end portion in the top portion 140 is referred to as the end portion E11 and the end portion E21. The other end of the end portion in the top portion 140 is referred to as the end portion E12 and the end portion E22. In the present example, the end portion E11, the end portion E21, the end portion E12, and the end portion E22 are arranged on the periphery of the top portion 140.

The groove 142-1 may be provided to extend from one end in the top portion 140 (the end portion E11) to the other end (the end portion E12). The groove 142-2 may be provided to extend from one end in the top portion 140 (the end portion E21) to the other end (the end portion E22). Providing the groove 142 that extends from the one end in the top portion 140 to the other end prevents the liquid 40 ejected from the ejection portion 14 from remaining in the groove 142.

If the liquid 40 is sea water or an alkaline liquid, the liquid 40 remaining in the groove 142 facilitates the corrosion of the top portion 140 (the groove 142). In the ejection portion 14 in the present example, the groove 142 is provided to extend from one end to the other end in the top portion 140 so that the liquid 40 is easily discharged from the groove 142 to the outside of the top portion 140. Thus, for the ejection portion 14 in the present example, the top portion 140 (the groove 142) is resistant to corrosion.

In the top portion 140, the groove 142 may be provided to pass through the center C1 and may be provided not to pass through the center C1. As described later, the orientation of the ejection portion 14 relative to the branch tubes 13 is determined according to the groove 142. Thus, the groove 142 in the plane of the top portion 140 is preferably long. Thus, the groove 142 is preferably provided to pass through the center C1.

In one ejection portion 14, the angle formed by one groove 142 and another groove 142 may be more than 0° and less than 90°, or more than 90° and less than 180°. In other words, one groove 142 and the another groove 142 in one ejection portion 14 may not be orthogonal and may not be parallel to each other. In the present example, the angle (2θ' in Fig. 5) formed by one groove 142 (the groove 142-1) and another groove 142 (the groove 142-2) in one ejection portion 14 may be more than 90° and less than 180°. The angle 2θ' formed by the groove 142-1 and the groove 142-2 may be more than or equal to 100° and less than or equal to 140°, or may be more than or equal to 110° and less than or equal to 130°. The angle 2θ' is, for example, 120°.

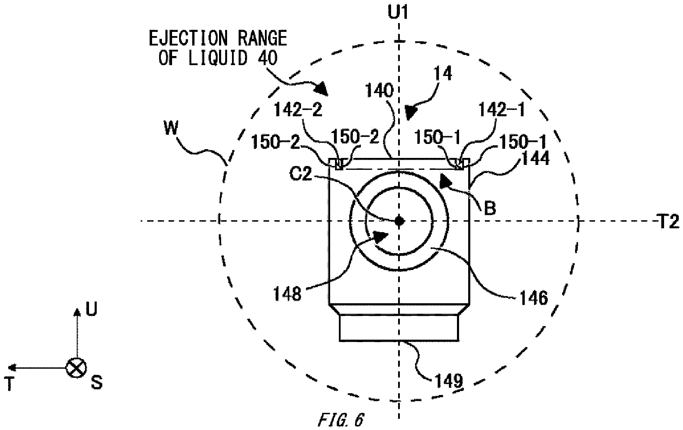

Fig. 6 is a figure showing one example of a front view of the ejection portion 14. The front view means the view when the ejection portion 14 is seen in the S axis direction. The ejection portion 14 in the present example has the ejection plane 146 that has a circular shape in the front view. The ejection plane 146 has an opening 148. The opening 148 may have a circular shape in the front view.

The center of the opening 148 in a plane that is parallel to the ejection plane 146 is referred to as the center C2. In Fig. 6, the straight lines in the T axis direction and the U axis direction passing through the center C2 in the ejection plane 146 are indicated with a dashed line T2 and a dashed line U1, respectively. In the T axis direction, the position of the center C1 (see Fig. 5) may be the same as the position of the center C2 in the ejection plane 146.

The ejection portion 14 in the present example ejects the liquid 40 from the opening 148. In the front view of Fig. 6, the outer edge of the range in which the liquid 40 is ejected has a circular shape in the cross section that is parallel to the ejection plane 146. In Fig. 6, this circular outer edge is indicated with the large dashed line W. In addition, in the front view of Fig. 6, the position of the central axis of the conical pattern, with which the liquid 40 is sprayed, may be the center C2.

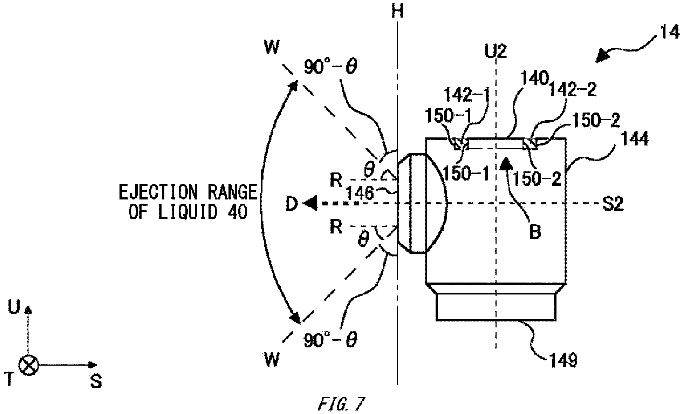

Fig. 7 is a figure showing one example in the side view of the ejection portion 14. The side view means the view of the ejection portion 14 seen in the T axis direction. In Fig. 7, the straight line in the S axis direction passing through the position of the center C2 in the U axis direction (see Fig. 6) is indicated with a dashed line S2. In addition, the straight line in the U axis direction passing through the position of the center C1 (see Fig. 5) in the S axis direction is indicated with the dashed line U2 in Fig. 7. In addition, the bottom plane B of the groove 142 is indicated with the dashed-and-dotted line. The bottom plane B in the present example is parallel to the ST plane.

In the side view of Fig. 7, the outer edge of the range in which the liquid 40 is ejected is indicated with the large dashed line W. In addition, the straight line that is parallel to the dashed line S2 and passes through the both ends in the U axis direction of the ejection plane 146 is indicated with a dashed line R in Fig. 5. In the SU plane, the angle formed by the large dashed line W and the dashed line R may be equal to the angle θ' shown in Fig. 5.

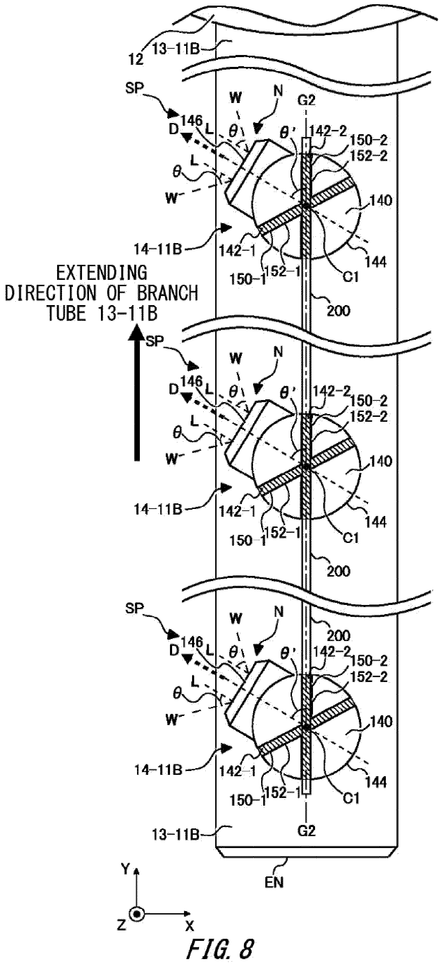

Fig. 8 is a figure showing one example of the arrangement of a plurality of ejection portions 14 connected to one branch tube 13. Fig. 8 shows the enlarged view of the region including the trunk tube 12, the branch tube 13-11B, and three ejection portions 14-11B in Fig. 2. In addition, Fig. 8 shows the fixture 200, which will be described later, for determining the direction in the XY plane of the ejection portion 14-11.

The branch tube 13-11B extends in the direction away from the trunk tube 12. In the present example, the direction is in the Y axis direction. The end portion of the branch tube 13-11B that is at the opposite side to the trunk tube 12 is referred to as the end portion EN.

Each of the three ejection portions 14-11B is connected to the branch tube 13-11B. The three ejection portions 14-11B in the present example are connected to the branch tube 13-11B such that the U axis direction in Fig. 5 - Fig.7 is parallel to the Z axis direction.

The extending direction of the branch tube 13-11B (the Y axis direction) is referred to as the direction F. The ejection portion 14-11B in the present example is arranged such that the direction in which the liquid 40 is ejected (the direction D) and the direction F form the angle θ at the side of the trunk tube 12 in the XY plane.

In the present example, the angle formed by one groove 142 in one ejection portion 14 and the extending direction of the branch tube 13 is equal to the angle formed by one groove 142 in another ejection portion 14 and the extending direction of the branch tube 13. In Fig. 8 as an illustrative example, the angle formed by one groove 142 (the groove 142-2) in one ejection portion 14 (the ejection portion 14-11B arranged to be closest to the side of the trunk tube 12) and the extending direction of the branch tube 13 (the direction F) is 0°. In addition, the angle formed by one groove 142 (the groove 142-2) in another ejection portion 14 (the ejection portion 14-11B arranged to be closest to the side of the end portion EN) and the extending direction of the branch tube 13 (the direction F) is also 0°. In other words, in the example of Fig. 8, the angle formed by one groove 142 in one ejection portion 14 and the extending direction of the branch tube 13 is equal to the angle formed by one groove 142 in another ejection portion 14 and the extending direction of the branch tube 13.

One groove 142 in one ejection portion 14 and one groove 142 in another ejection portion 14 may extend in the extending direction of one branch tube 13. In Fig. 8 as an illustrative example, one groove 142 (the groove 142-2) in one ejection portion 14 (the ejection portion 14-11B arranged to be closest to the side of the trunk tube 12) and one groove 142 (the groove 142-2) in another ejection portion 14 (the ejection portion 14-11B arranged to be closest to the side of the end portion EN) extend in the extending direction (the direction F) of the one branch tube 13 (the branch tube 13-11B).

The acute angle θ' that is formed by the direction D in which one ejection portion 14 (the ejection portion 14-11B arranged to be closest to the side of the trunk tube 12) ejects the liquid 40 from the ejection plane 146 and one groove 142 (the groove 142-2) of one ejection portion 14 (the ejection portion 14-11B arranged to be closest to the side of the trunk tube 12) may be equal to the acute angle θ' that is formed by the direction D in which another ejection portion 14 (the ejection portion 14-11B arranged to be closest to the side of the end portion EN) ejects the liquid 40 from the ejection plane 146 and one groove 142 (groove 142-2) of another ejection portion 14 (the ejection portion 14-11B arranged to be closest to the side of the end portion EN).

The angle θ' that is formed in the direction of the central axis of the trunk tube 12 by the direction D in which one ejection portion 14 (the ejection portion 14-11B arrange to be closest to the side of the trunk tube 12) ejects the liquid 40 from the ejection plane 146 and the extending direction F of one branch tube 13 (the branch tube 13-11B) may be equal to the angle that is formed in the direction of the central axis of the trunk tube 12 by the direction D in which another ejection portion 14 (the ejection portion 14-11B arranged to be closest to the side of the end portion EN) ejects the liquid 40 from the ejection plane 146 and the extending direction F of the one branch tube 13 (the branch tube 13-11B).

One groove 142 in one ejection portion 14 may extend in the same straight line as one groove 142 in another ejection portion 14. In the example of Fig. 8, one groove 142 (groove 142-2) in one ejection portion 14 (the ejection portion 14-11B arranged to be closest to the side of the trunk tube 12) extends in the same straight line as one groove 142 (the groove 142-2) in another ejection portion 14 (the ejection portion 14-11B arranged to be closest to the side of the end portion EN). In the example of Fig. 8, the straight line is parallel to the extending direction (the direction F) of the one branch tube 13-11B.

In the X axis direction, the space that is on the side to which the liquid 40 is ejected and is adjacent to the branch tube 13-11B is referred to as the space SP. When the ejection portion 14-11B is arranged such that the direction D and the direction F forms the angle θ on the side of the trunk tube 12, the region N (see Fig. 5) of the ejection portion 14-11B on the side of the trunk tube 12 is less likely to overlap the space SP in the top view. In other words, when the ejection portion 14-11B is arranged such that the angle θ is formed, the range of the two large dashed lines W in which the liquid 40 is ejected is likely to overlap the space SP in the top view. Thus, when the ejection portion 14-11B is arranged such that the angle θ is formed, the liquid 40 is more easily ejected from the ejection portion 14-11B into the space SP. Thus, the liquid 40 is likely to be ejected to the exhaust gas 30 that exists in the space SP.

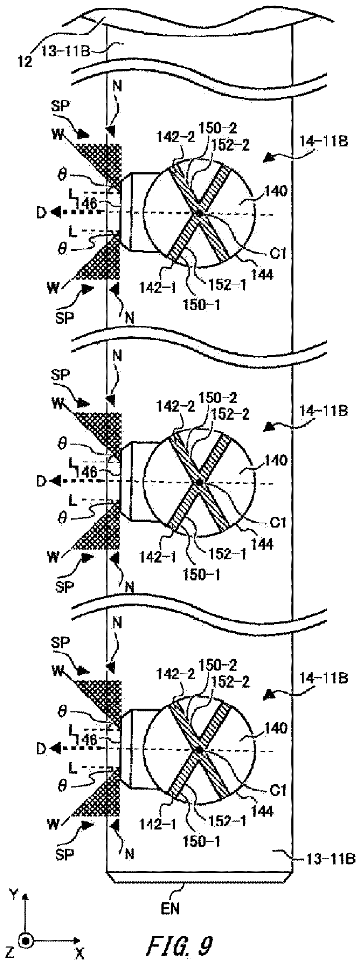

Fig. 9 is a figure showing a comparative example of the arrangement of a plurality of ejection portions 14 connected to one branch tube 13. The present comparative example is different from the example shown in Fig. 8 in that the direction D in which the liquid 40 is ejected from three ejection portions 14-11B is the direction (the X axis direction) orthogonal to the extending direction (the Y axis direction) of the branch tube 13.

When the ejection portion 14-11B is arrange such that the direction D is orthogonal to the direction F, the region N and the space SP are likely to overlap each other. In Fig. 9, the region in which the region N and the space SP overlap each other is indicated with hatching. In the case of the present comparative example, since the liquid 40 may not be ejected to the region indicated with hatching, the exhaust gas 30 that exists in the region indicated with hatching may not be treated with the liquid 40. Thus, the ejection portion 14-11B is preferably arranged such that the direction D and the direction F form the angle θ as in the example shown in Fig. 8.

Here, the example of Fig. 8 is described again. The extending direction of the groove 142-2 and the direction D form the angle θ' on the side of the trunk tube 12. Thus, when the angle θ is equal to the angle θ', by aligning the extending direction of the groove 142-2 with the direction F, the ejection portions 14-11B are arranged in the direction that causes the direction D and the direction F to form the angle θ.

The top portion 140 of each of the plurality of ejection portions 14 has each the groove 142. Thus, the orientations of the grooves 142 of each of the plurality of ejection portions 14 connected to one branch tube 13 are matched so that the plurality of ejection portions 14 connected to one branch tube 13 are arranged in the same orientations. In the present example, the fixture 200 is aligned, from above the ejection portion 14-11B, with the groove 142-2 of each of the three ejection portions 14-11B connected to the branch tube 13-11B so that each groove 142-2 is arranged on the dashed-and-dotted line G2. In other words, in the present example, the orientations of the three ejection portions 14-11B can be set altogether in the direction that causes the direction D and the direction F to form the angle θ, without separately setting each orientation of the three ejection portions 14-11B.

In the present example, one groove 142 (the groove 142-2) of one ejection portion 14 and one groove 142 (the groove 142-2) of another ejection portion 14 (the ejection portion 14-11B arrange to be closest to the side of the end portion EN) extend in the extending direction F of one branch tube 13 (the branch tube 13-11B). In the present example, the acute angle formed by the direction D in which the one ejection portion 14 ejects the liquid 40 from the ejection plane 146 and the one groove 142 in the one ejection portion 14 is equal to the acute angle formed by the direction D in which the another ejection portion 14 ejects the liquid 40 from the ejection plane 146 and the one groove 142 of the another ejection portion 14. Thus, in the present example, the fixture 200 is aligned with the ejection portion 14-11B from above, so that each of the grooves 142-2 is arranged on the dashed-and-dotted line G2. In other words, in the present example, the orientations of the plurality of ejection portions 14-11B can be set altogether in the direction that causes the direction D and the direction F to form the angle θ, without separately setting the orientation of each of the plurality of ejection portions 14-11B.

As described above, when the orientations of the plurality of ejection portions 14 are set altogether by the fixture 200, the side plane 150 of the groove 142 preferably has the straight portion 152 in the top view. When the side plane 150 of the groove 142 has the straight portion 152 in the top view, the side plane (the YZ plane in Fig. 8) of the fixture 200 is contacted with the straight portion 152 of the side plane 150 so that the orientations of the plurality of the ejection portions 14 can be easily set altogether.

In addition, in the present example, the groove 142 is machined on the top portion 140 of the ejection portion 14. The machining of the groove 142 is easier than the machining of the lower plane (which is described later) of the ejection portion 14. Thus, in the present example, the cost for machining the groove 142 tends to be lower than with the cost for machining the lower plane of the ejection portion 14.

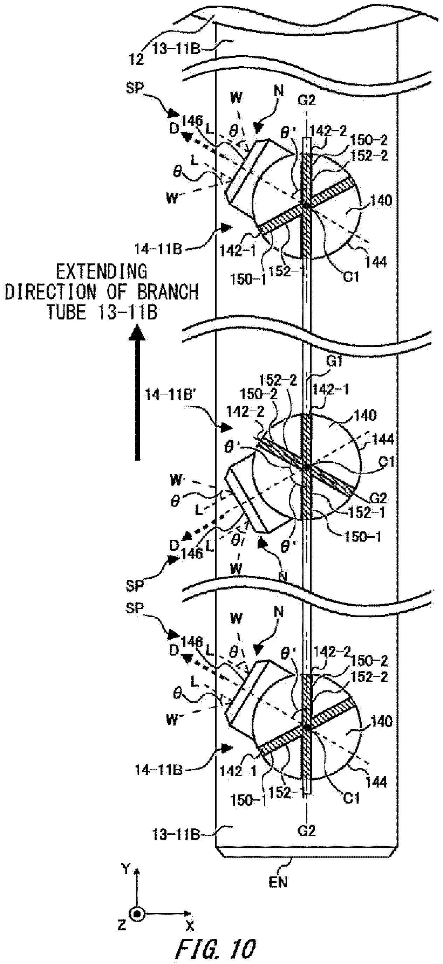

Fig. 10 is a figure showing one example of another arrangement of a plurality of ejection portions 14 connected to one branch tube 13. In the present example, three ejection portions 14 are connected to one branch tube 13. In the present example, the ejection portion arranged at the center in the direction F (the extending direction of the branch tube 13-11B) is referred to as the ejection portion 14-11B'. In the present example, one ejection portion 14-11B and another ejection portion 14-11B' connected to one branch tube 13-11B are arranged in different orientations in the XY plane. The present example is different from the example shown in Fig. 8 in these respects.

In the present example, the angle formed by one groove 142 in one ejection portion 14 and the extending direction of the branch tube 13 is different from the angle formed by one groove 142 in another ejection portion 14 and the extending direction of the branch tube 13. In Fig. 10 as an illustrative example, the angle formed by one groove 142 (the groove 142-2) in one ejection portion 14 (the ejection portion 14-11B arranged to be closest to the side of the trunk tube 12) and the extending direction (the direction F) of the branch tube 13 is 0°. In addition, the angle formed on the side of the end portion EN by one groove 142 (the groove 142-2) in another ejection portion 14 (the ejection portion 14-11B') and the extending direction (the direction F) of the branch tubes 13 is the angle 2θ'. In other words, in the example of Fig. 10, the angle formed by one groove 142 in one ejection portion 14 and the extending direction of the branch tube 13 is different from the angle formed by one groove 142 in another ejection portion 14 and the extending direction of the branch tube 13.

The direction in which the liquid 40 is ejected from the ejection portion 14-11B' is referred to as the direction D'. In the present example, the extending direction of the groove 142-1 of the ejection portion 14-11B' and the direction D' form the angle θ' on the side of the end portion EN. Thus, when the angle θ is equal to the angle θ', the extending direction of the groove 142-1 is aligned with the direction F by means of the fixture 200 so that the ejection portion 14-11B' is arranged in a direction such that the direction D' and the direction F form the angle θ.

In the present example, the plurality of grooves 142 on the top portion 140 of one ejection portion 14 is provided such that the angles relative to the branch tube 13 are different from each other. In other words, in the ejection portion 14-11B' shown in Fig. 10, the angle formed on the side of the end portion EN by the groove 142-1 and the branch tube 13 is 0° while the angle formed on the side of the end portion EN by the groove 142-2 and the branch tube 13 is 2θ'. Thus, when the plurality of ejection portions 14 is connected to one branch tube 13, the plurality of ejection portions 14 can be set in the directions relative to the branch tube 13 that are different from each other.

The angle formed by the direction in which one ejection portion 14 ejects the liquid 40 and the extending direction of one branch tube 13 may be different from the angle formed by the direction in which the another ejection portion 14 ejects the liquid 40 and the extending direction of one branch tube 13. In Fig. 10 as an illustrative example, the direction in which one ejection portion 14 (the ejection portion 14-11B arranged to be closest to the side of the trunk tube 12) ejects the liquid 40 and the extending direction (the direction F) of one branch tube 13 (the branch tube 13-11B) form the angle θ' on the side of the trunk tube 12, and the direction in which another ejection portion 14 (the ejection portion 14-11B') ejects the liquid 40 and the extending direction (the direction F) of the one branch tube 13 (the branch tube 13-11B) form the angle θ' on the side of the end portion EN. In other words, in the example of Fig. 10, the direction in which the ejection portion 14-11B ejects the liquid 40 and the direction in which the ejection portion 14-11B' ejects the liquid 40 relative to the direction F of the branch tube 13 (the extending direction) are different from each other.

The acute angle θ' formed by the direction D in which one ejection portion 14 (the ejection portion 14-11B arranged to be closest to the side of the trunk tube 12) ejects the liquid 40 from the ejection plane 146 and one groove 142 (the groove 142-2) of one ejection portion 14 (the ejection portion 14-11B arranged to be closest to the side of the trunk tube 12) may be equal to the acute angle θ' formed by the direction D in which another ejection portion 14 (the ejection portion 14-11B') ejects the liquid 40 from the ejection plane 146 and one groove 142 (the groove 142-1) of another ejection portion 14 (the ejection portion 14-11B').

The angle θ' formed on the side of the central axis of the trunk tube 12 by the direction D in which one ejection portion 14 (the ejection portion 14-11B arranged to be closest to the side of the trunk tube 12) ejects the liquid 40 from the ejection plane 146 and the extending direction F of one branch tube 13 (the branch tube 13-11B) may be different from the angle (180° -θ' in the present example) formed on the side of the central axis of the trunk tube 12 by the direction D in which the another ejection portion 14 (the ejection portion 14-11B') ejects the liquid 40 from the ejection plane 146 and the extending direction F of one branch tube 13 (the branch tube 13-11B).

Notably, the angle formed by the groove 142 of the ejection portion 14 connected to one branch tube 13 and the one branch tube 13 may be different from the angle formed by the groove 142 of the ejection portion 14 connected to another branch tube 13 and the another branch tube 13. For example, the angle formed by the groove 142 of the ejection portion 14-11B connected to the branch tube 13-11B and the branch tube 13-11B may be different from the angle formed by the groove 142 of the ejection portion 14-12B connected to the branch tube 13-12A (see Fig. 2) and the branch tube 13-12A. In addition, for example, the angle formed by the groove 142 of the ejection portion 14-11B connected to the branch tube 13-11B and the branch tube 13-11B may be different from the angle formed by the groove 142 of the ejection portion 14-2B connected to the branch tube 13-2B (see Fig. 1) and the branch tube 13-2B.

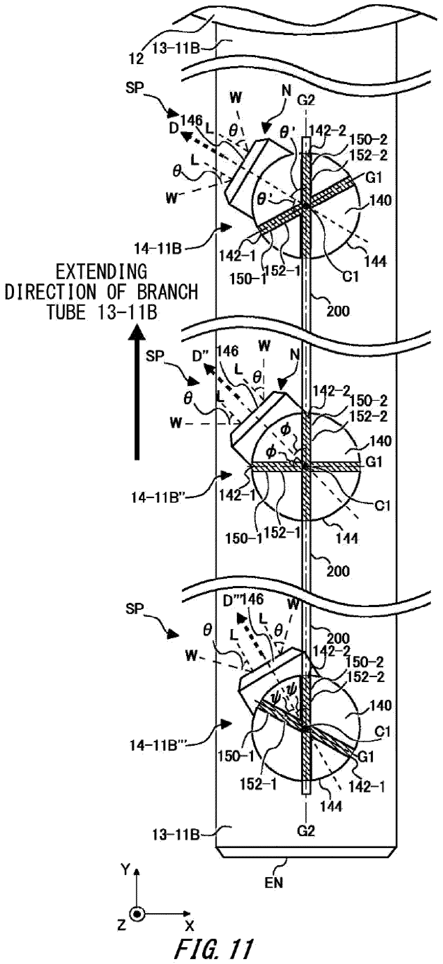

Fig. 11 is a figure showing one example of another arrangement of a plurality of ejection portions 14 connected to one branch tube 13. In the present example, three ejection portions 14 are connected to one branch tube 13. The ejection portions 14 in the present example are referred to as the ejection portion 14-11B, the ejection portion 14-11B", and the ejection portion 14-11B''' from the side near the trunk tube 12. In the present example, the ejection portion 14-11B, the ejection portion 14-11B", and the ejection portion 14-11B''' connected to one branch tube 13-11B are each arranged in the directions relative to the XY plane that are different from each other. The present example is different from the example shown in Fig. 8 in these respects. In the present example, the angle formed by the ejection plane 146 and the groove 142 in the ejection portion 14-11B, the angle formed by the ejection plane 146 and the groove 142 in the ejection portion 14-11B", and the angle formed by the ejection plane 146 and the groove 142 in the ejection portion 14-11B''' are each different from each other.

The directions in which the liquid 40 is ejected from the ejection portion 14-11B, the ejection portion 14-11B", and the ejection portion 14-11B''' are referred to as the direction D, the direction D" and the direction D'", respectively. In the present example, the extending direction of the groove 142-2 of the ejection portion 14-11B and the direction D form the angle θ' on the side of the trunk tube 12. In the present example, the extending direction of the groove 142-2 of the ejection portion 14-11B" and the direction D" form the angle ϕ on the side of the trunk tube 12. In the present example, the extending direction of the groove 142-2 of the ejection portion 14-1 1B''' and the direction D'" form the angle ψ on the side of the trunk tube 12. The angle θ', the angle ϕ, and the angle ψ are each different from each other.

In the present example, the angle formed by one groove 142 in one ejection portion 14 and the extending direction of the branch tube 13 is different from the angle formed by one groove 142 in another ejection portion 14 and the extending direction of the branch tube 13. In Fig. 11 as an illustrative example, the angle formed on the side of the trunk tube 12 by one groove 142 (the groove 142-1) in one ejection portion 14 (the ejection portion 14-11B) and the extending direction of the branch tube 13 (the direction F) is the angle 2θ'. In addition, the angle formed on the side of the trunk tube 12 by one groove 142 (the groove 142-1) in another ejection portion 14 (the ejection portion 14-11B") and the extending direction of the branch tube 13 (the direction F) is the angle 2ϕ. In addition, the angle formed on the side of the trunk tube 12 by one groove 142 (the groove 142-1) in another ejection portion 14 (the ejection portion 14-11B"') and the extending direction (the direction F) of the branch tubes 13 is the angle 2ψ. In other words, in the example of Fig. 11, the angle formed by one groove 142 in one ejection portion 14 and the extending direction of the branch tube 13 is different from the angle formed by one groove 142 in another ejection portion 14 and the extending direction of the branch tube 13.

In the present example, since each of the angle θ', the angle ϕ, and the angle ψ are each different from each other as described above, the ejection portion 14-11B, the ejection portion 14-11B", and the ejection portion 14-11B''' can be set in the directions different from each other, by aligning the extending direction of each groove 142-2 of the ejection portion 14-11B, the ejection portion 14-11B", and the ejection portion 14-11B''' with the direction F by means of the fixture 200.

In the present example, the angle ϕ is less than the angle θ' and the angle ψ is less than the angle ϕ. In other words, in the present example, the angle formed by the direction in which the liquid 40 is ejected and the direction F is less in the ejection portion 14 that is farther from the trunk tube 12 (closer to the end portion EN) in the direction F (the extending direction of the branch tube 13-11B). Thus, the region where the region N and the space SP overlap each other (the hatched part in Fig. 9) is less likely to occur in the ejection portion 14 that is farther from the trunk tube 12. Thus, in the ejection portion 14 that is farther from the trunk tube 12, the liquid 40 is more easily ejected to the exhaust gas 30 that exists in the space SP.

The angle formed by one groove 142 and another groove 142 in the one ejection portion 14 may be different from the angle formed by one groove 142 and another groove 142 in another ejection portion 14. In Fig. 11 as an illustrative example, the angle formed by one groove 142 (the groove 142-1) and another groove 142 (the groove 142-2) in one ejection portion 14 (the ejection portion 14-11B) is the angle 2θ', and the angle formed by one groove 142 (the groove 142-1) and another groove 142 (the groove 142-2) in the another ejection portion 14 (the ejection portion 14-11B") is the angle 2ϕ. In the example of Fig. 11, the angle 2θ' is different from the angle 2ϕ. Similarly, in the example of Fig. 11, the angle 2θ' is different from the angle 2ψ and the angle 2ϕ is different from the angle 2ψ.

The acute angle θ' formed by the direction D in which the one ejection portion 14 (the ejection portion 14-11B) ejects the liquid 40 from the ejection plane 146 and one groove 142 (the groove 142-2) of the one ejection portion 14 (ejection portion 14-11B) may be different from the acute angle ϕ formed by the direction D" in which the another ejection portion 14 (the ejection portion 14-11B") ejects the liquid 40 from the ejection plane 146 and the one groove 142 (the groove 142-2) of another ejection portion 14 (the ejection portion 14-11B").

The angle θ' formed on the side of the central axis of the trunk tube 12 by the direction D in which the one ejection portion 14 (the ejection portion 14-11B) ejects the liquid 40 from the ejection plane 146 and the extending direction F of one branch tube 13 (the branch tube 13-11B) may be different from the angle ϕ formed on the side of the central axis of the trunk tube 12 by the direction D" in which another ejection portion 14 (the ejection portion 14-11B") ejects the liquid 40 from the ejection plane 146 and the extending direction F of one branch tube 13 (the branch tube 13-11B).

In the present example, one groove 142 (the groove 142-2) of one ejection portion 14 (the ejection portion 14-11B) and one groove 142 (the groove 142-2) of another ejection portion 14 (the ejection portion 14-11B") extends in the extending direction of one branch tube 13 (the branch tube 13-11B), and the acute angle formed by the direction D in which the one ejection portion 14 ejects the liquid 40 from the ejection plane 146 and the one groove 142 of the one ejection portion 14 is different from the acute angle formed by the direction D in which the another ejection portion 14 ejects the liquid 40 from the ejection plane 146 and the one groove 142 of the another ejection portion 14. Thus, in the present example, the fixture 200 is aligned with the ejection portion 14-11B from above so that each groove 142-2 is arranged on the dashed-and-dotted line G2. In other words, in the present example, the ejecting direction D of the ejection portion 14-11B, the ejecting direction D' of the ejection portion 14-11B', and the ejecting direction D" of the ejection portion 14-11B" can be set altogether in directions that form angles relative to the direction F that are each different from each other, without separately setting the each orientation of the ejection portion 14-11B, the ejection portion 14-11B', and the ejection portion 14-11B".

The angle ϕ may be more than 0° and less than 90°. The angle ϕ may be more than or equal to 20° and less than or equal to 70° or may be more than or equal to 30° and less than or equal to 60°. The angle ϕ is, for example, 45°. The angle ψ may be more than 0° and less than 90°. The angle ψ may be more than or equal to 10° and less than or equal to 50°, or may be more than or equal to 20° and less than or equal to 40°. The angle ψ is, for example, 30°.

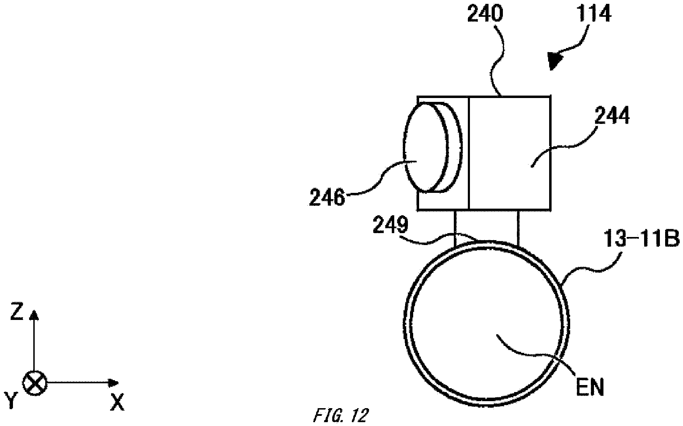

Fig. 12 is a figure showing the side view of the ejection portion 114 in the comparative example. The ejection portion 114 is connected to the branch tube 13-11B. Fig. 12 is a view of the branch tube 13-11B in Fig. 1 and Fig. 2 seen from the end portion EN toward the trunk tube 12 in the Y axis direction. The XZ cross section of the branch tube 13-11B in the present comparative example has a circular shape.

The ejection portion 114 has a top portion 240, a side plane 244, an ejection plane 246, and a lower plane 249. The lower plane 249 is a plane where the ejection portion 114 contacts the branch tube 13-11B. Since the XZ cross section of the branch tube 13-11B in the present comparative example has a circular shape, the lower plane 249 has an arc shape. in the XZ cross section.

In the present comparative example, the ejection portion 114 is arranged such that the ejection plane 246 tilts in the direction from the trunk tube 12 toward the end portion EN in the Y axis direction. Thus, in the side view of Fig. 12, the ejection plane 246 can be seen from the Y axis direction.

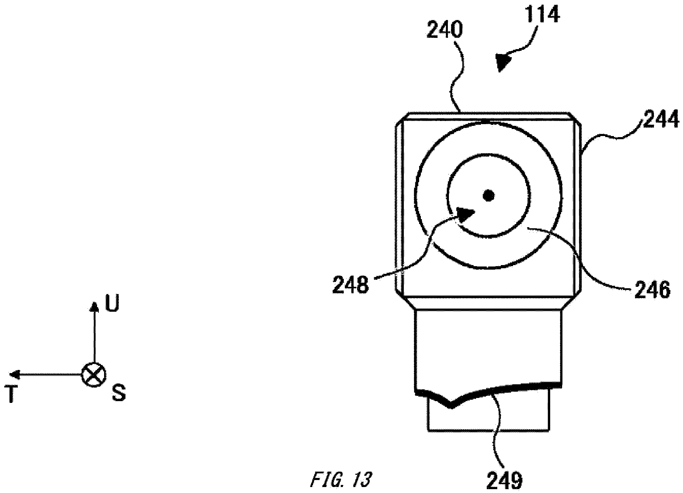

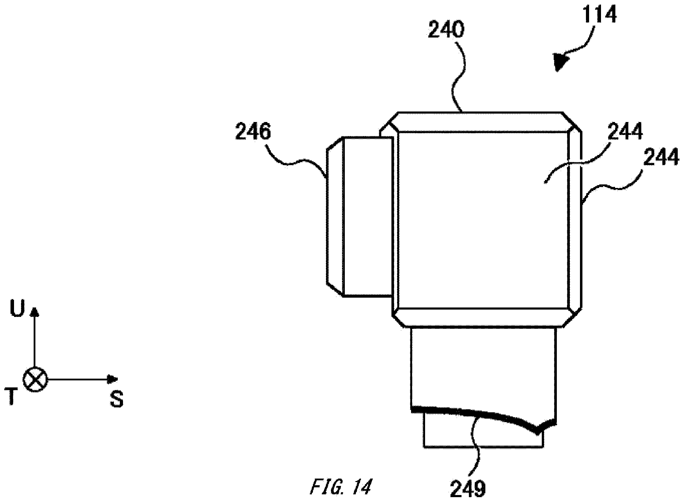

Fig. 13 and Fig. 14 are the front view and the side view of the ejection portion 114 in Fig. 12, respectively. The ejection portion 114 has the ejection plane 246 that has a circular shape in the front view. The ejection plane 246 has an opening 248. The opening 248 has a circular shape in the front view.

The shape of the lower plane 249 in the front view and the side view is indicated with the thick line in Fig. 13 and Fig. 14, respectively. In the present comparative example, since the ejection portion 114 is arranged such that the ejection plane 246 tilts in the Y axis direction from the trunk tube 12 toward the end portion EN, the lower plane 249 of the ejection portion 114 needs to be machined to match the shape of the branch tube 13-11B in the case of such an arrangement. If a plurality of ejection portions 114 is connected to one branch tube 13, the lower plane 249 of each of the plurality of ejection portions 114 needs to be machined separately. In addition, if the plurality of ejection portions 114 that is connected to one branch tube 13 is arranged in the orientations that are different from each other, the shapes of the lower planes 249 are different depending on the orientations of the ejection portion 114 and thus the lower plane 249 of each of the plurality of ejection portions 114 needs to be machined into shapes different from each other.

As described above, in the present comparative example, each of the lower planes 249 of the plurality of the ejection portions 114 needs to be machined separately. Thus, in the present comparative example, the cost for machining the lower plane 249 tends to be higher than the cost for machining the groove 142 (see Fig. 5).

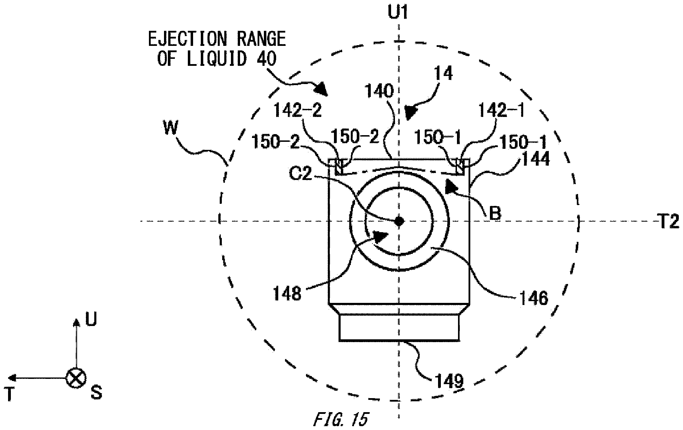

Fig. 15 is a figure showing another one example in the front view of the ejection portion 14. The bottom plane B of the groove 142 in the ejection portion 14 in the present example tilts relative to the top portion 140 of the ejection portion 14. The ejection portion 14 of the present example is different from the ejection portion 14 shown in Fig. 6 in these respects. If the ST plane is parallel to the horizontal direction, the bottom plane B in the present example tilts relative to the horizontal direction. The bottom plane B in the present example tilts from the center C1 (see Fig. 5) toward the end portion E11, the end portion E12, the end portion E21, and the end portion E22. If the bottom plane B tilts relative to the horizontal direction, the liquid 40 ejected from the ejection portion 14 is more easily discharged from the groove 142.

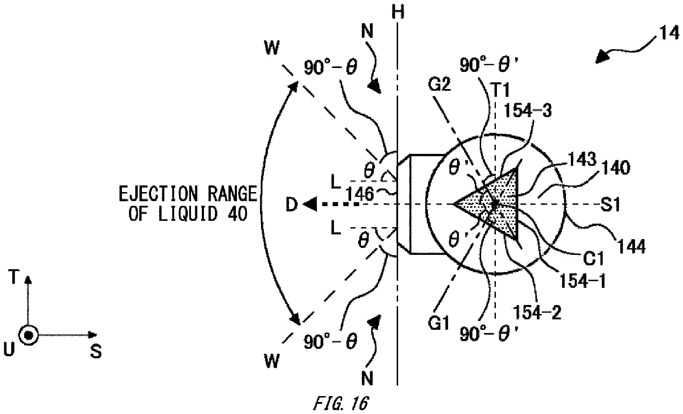

Fig. 16 is a figure showing another one example in the top view of the ejection portion 14. The top portion 140 of the ejection portion 14 in the present example is different from the ejection portion 14 shown in Fig. 5 in that it has the protrusion 143 instead of the groove 142 in the example shown in Fig. 5. The protrusion 143 in the present example protrudes from the top portion 140. The protrusion 143 in the present example protrudes from the lower plane 149 (see Fig. 6) toward the top portion 140 in the U axis direction. The protrusion 143 in the present example has an equilateral triangular shape in the top view. In the top portion 140, the position of the center of the gravity of the protrusion 143 in the top view may be equal to the position F the center C1.

The protrusion 143 has a plurality of side planes 154. The protrusion 143 in the present example has three side planes 154 (the side plane 154-1, the side plane 154-2, and the side plane 154-3). The side plane 154 is a plane that connects the upper plane of the protrusion 143 to the top portion 140. The side plane 154-2 and the side plane 154-3 in the present example extend in the direction of the dashed-and-dotted line G1 and the dashed-and-dotted line G2, respectively, in the top view.

In the present example, the normal direction of the side plane 154-2 and the normal direction of the side plane 154-3 form the predetermined angle θ' relative to the S axis direction. In Fig. 16, the normal direction of the side plane 154-2 and the normal direction of the side plane 154-3 are indicated with the dashed-and-dotted line G1 and the dashed-and-dotted line G2, respectively. The angle θ' may be equal to or may be different from the angle θ. The angle θ' may be more than 0° and less than 90°. The angle θ' may be more than or equal to 40° and less than or equal to 80° or may be more than or equal to 50° and less than or equal to 70°. The angle θ' of the present example is 60°.

The side plane 154-1 in the present example is parallel to the T axis direction. If the protrusion 143 has a triangle shape other than an equilateral triangular shape in the top view, the side plane 154-1 may not be parallel to the T axis direction.

The protrusion 143 may have a polygonal shape other than the triangle shape in the top view. If the protrusion 143 has the polygonal shape, the normal direction of at least one of the side planes 154 of the protrusion 143 having the polygonal shape may extend in the direction that forms the predetermined angle θ' with the S axis direction.

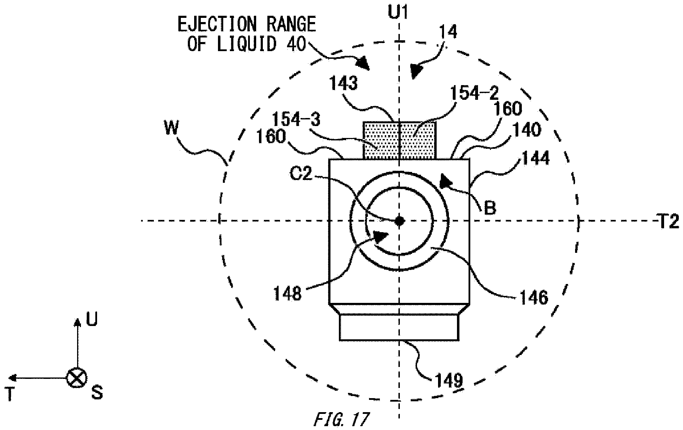

Fig. 17 is a figure showing another one example in the front view of the ejection portion 14. The protrusion 143 in the present example protrudes from the top portion 140. If the ST plane is in the horizontal direction, the side plane 154 of the protrusion 143 may be parallel to the gravitational direction (the U axis direction).

The region of the top portion 140 where the protrusion 143 is not arranged is referred to as the upper plane 160. The upper plane 160 is the region of the top portion 140 that does not overlap the protrusion 143 in the top view. The upper plane 160 in the present example is parallel to the ST plane. If the ST plane is in the horizontal direction, the upper plane 160 in the present example is parallel to the horizontal direction. The upper plane 160 may tilt relative to the horizontal direction from the center of the top portion 140 to the side plane 144 of the ejection portion 14. If the upper plane 160 tilts relative to the horizontal direction from the center of the top portion 140 to the side plane 144 of the ejection portion 14, the liquid 40 ejected from the ejection portion 14 is less likely to remain on the upper plane 160.

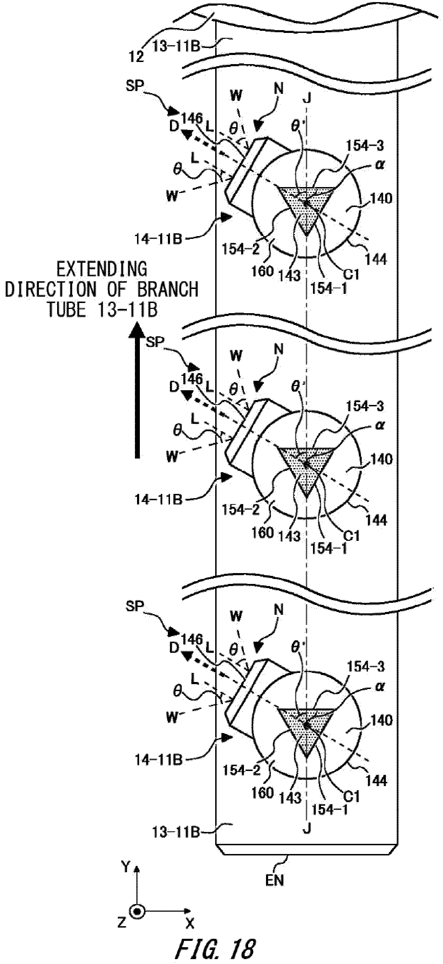

Fig. 18 is a figure showing one example of the arrangement of a plurality of ejection portions 14 connected to one branch tube 13. In the present example, instead of the ejection portion 14-11B in Fig. 8, the ejection portion 14-11B shown in Fig. 16 and Fig. 17 is connected to the branch tube 13-11B. In addition, in Fig. 18, the straight line passing through the center C1 of the top portions 140 of three ejection portions 14 are indicated with a dashed-and-dotted line J. The dashed-and-dotted line J is parallel to the Y axis direction.

In the present example, the angle formed by one side plane 154 of the protrusion 143 in one ejection portion 14 and the extending direction of the branch tube 13 is equal to the angle formed by one side plane 154 of the protrusion 143 in another ejection portion 14 and the extending direction of the branch tube 13. In Fig. 18 as an illustrative example, the angle formed by one side plane 154 (the side plane 154-3) of the protrusion 143 in one ejection portion 14 (the ejection portion 14-11B arranged to be closest to the side of the trunk tube 12) and the extending direction (the direction F) of the branch tube 13 is referred to as the angle α. In this case, the angle formed by one side plane 154 (the side plane 154-3) of the protrusion 143 in another ejection portion 14 (the ejection portion 14-11B arranged to be closest to the side of the end portion EN) and the extending direction (the direction F) of the branch tube 13 is also the angle α. In other words, the angle formed by one side plane 154 of the protrusion 143 in one ejection portion 14 and the extending direction of the branch tube 13 is equal to the angle formed by one side plane 154 of the protrusion 143 in another ejection portion 14 and the extending direction of the branch tube 13. Notably, the angle α in the present example is 90°.

One side plane 154 (the side plane 154-1) of one ejection portion 14 (the ejection portion 14-11B arranged to be closest to the side of the trunk tube 12) is parallel to the ejection plane 146 of one ejection portion (the ejection portion 14-11B arranged to be closest to the side of the trunk tube 12), and one side plane 154 (the side plane 154-1) of another ejection portion 14 (the ejection portion 14-11B arranged to be closest to the side of the end portion EN) may be parallel to the ejection plane 146 of another ejection portion 14 (the ejection portion 14-11B arranged to be closest to the side of the end portion EN). The acute angle θ' formed by the direction D in which the one ejection portion 14 (the ejection portion 14-11B arranged to be closest to the side of the trunk tube 12) ejects the liquid 40 from the ejection plane 146 and the extending direction F of one branch tube 13 (the branch tube 13-11B) may be equal to the acute angle θ' formed by the direction F in which another ejection portion 14 (the ejection portion 14-11B arranged to be closest to the side of the end portion EN) ejects the liquid 40 from the ejection plane 146 and the extending direction F of one branch tube 13 (the branch tube 13-11B).

The angle θ' that is formed in the direction of the central axis of the trunk tube 12 by the direction D in which one ejection portion 14 (the ejection portion 14-11B arrange to be closest to the side of the trunk tube 12) ejects the liquid 40 from the ejection plane 146 and the extending direction F of one branch tube 13 (the branch tube 13-11B) may be equal to the angle θ' that is formed in the direction of the central axis of the trunk tube 12 by the direction D in which another ejection portion 14 (the ejection portion 14-11B arranged to be closest to the side of the end portion EN) ejects the liquid 40 from the ejection plane 146 and the extending direction F of the one branch tube 13 (the branch tube 13-11B).

In the present example, the top portion 140 of each of the plurality of ejection portion 14 each has the protrusion 143. Thus, the orientations of the protrusions 143 of each of the plurality of ejection portions 14 connected to one branch tube 13 are matched with each other so that the plurality of ejection portions 14 connected to one branch tube 13 is arranged in the same orientation.

In the present example, one side plane 154 (the side plane 154-1) of one ejection portion 14 (the ejection portion 14-11B arranged to be closest to the side of the trunk tube 12) is parallel to the ejection plane 146 of the one ejection portion 14, and one side plane 154 (the side plane 154-1) of another ejection portion 14 (the ejection portion 14-11B arranged to be closest to the side of the end portion EN) is parallel to the ejection plane 146 of the another ejection portion 14. In the present example, the acute angle formed by the direction D in which the one ejection portion 14 ejects the liquid 40 from the ejection plane 146 and the extending direction F of one branch tube 13 (the branch tube 13-11B) is equal to the acute angle formed by the direction D in which the another ejection portion 14 ejects the liquid 40 from the ejection plane 146 and the extending direction D of one branch tube 13 (the branch tube 13-11B). Thus, in the present example, by aligning the fixture 210 on the apex P of the protrusion 143 of each of the plurality of ejection portions 14-11B connected to the branch tube 13-11B, the orientations of the plurality of ejection portions 14-11B can be set altogether in a direction that causes the direction D (the direction in which the liquid 40 is ejected) and the direction F (the extending direction (the Y axis direction) of the branch tube 13-11B) to form the angle θ, without separately setting the orientations of the plurality of ejection portions 14-11B.

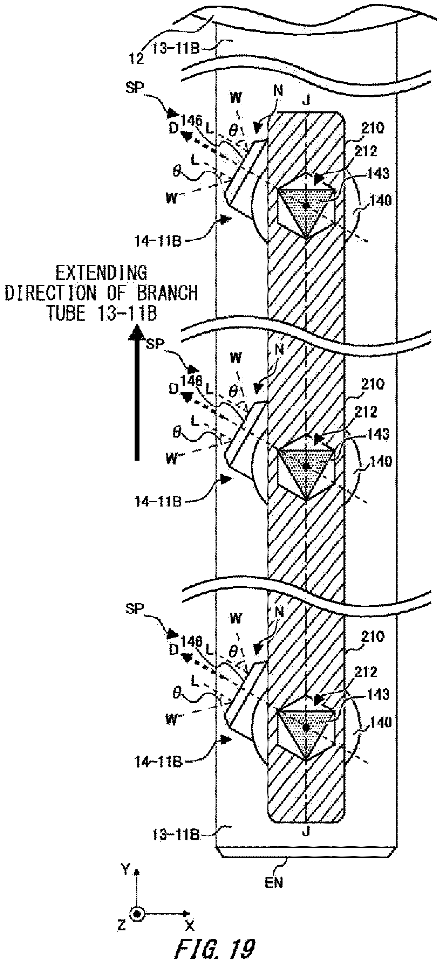

Fig. 19 is a figure showing the fixture 210, which is aligned with Fig. 18, for determining the directions of the plurality of ejection portions 14-11. The fixture 210 may be a plate-like member that has the longitudinal direction in the extending direction (the Y axis direction) of the branch tubes 13 and has a plane parallel to the XY plane. The fixture 210 has the opening 212 for determining the orientation of the ejection portion 14. The fixture 210 has a plurality of openings 212. The number of the openings 212 that one fixture 210 has is equal to the number of the plurality of ejection portions 14 connected to one branch tube 13.

In the present example, the opening 212 of the fixture 210 is aligned with the protrusion 143 of each of three ejection portions 14-11B connected to the branch tube 13-11B from above the ejection portions 14-11B. Thereby, the three ejection portions 14-11B can be set altogether.

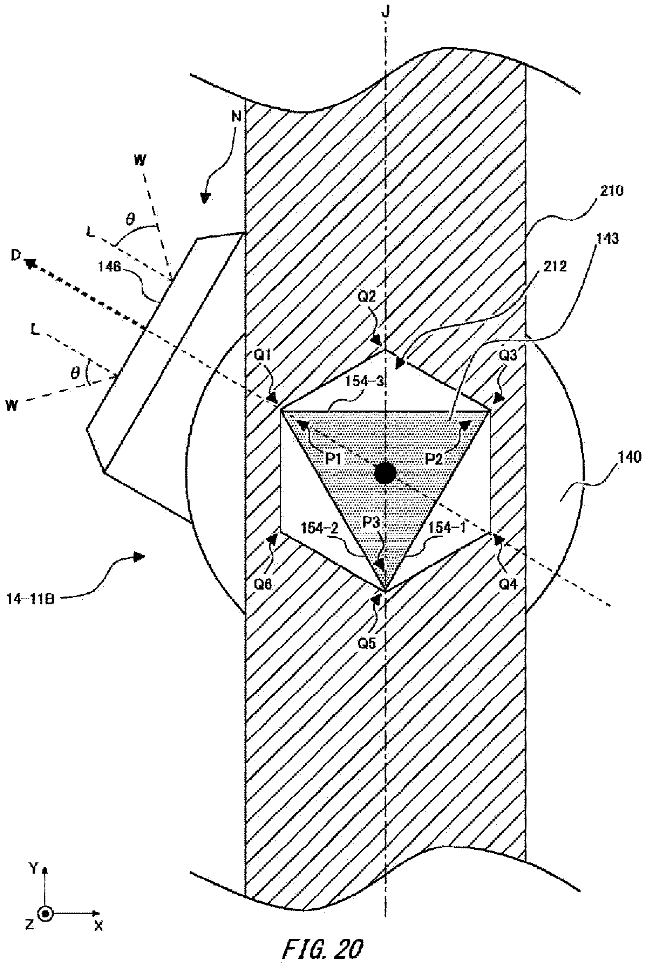

Fig. 20 is a figure showing the enlarged view of one ejection portion 14-11B and the fixture 210 in Fig. 19. In Fig. 20, the protrusion 143 of the ejection portion 14-11B and the opening 212 of the fixture 210 are shown as the enlarged view.

The shape of the protrusion 143 in the top view is assumed to be a polygon with n sides. The n is an integer more than or equal to three. The shape of the opening 212 in the top view may be a polygon having n or more sides. The convex portion of the protrusion 143 in the top view is referred to as the convex portion P. The concave portion of the opening 212 in the top view is referred to as the concave portion Q. If the number of the convex portion P that the protrusion 143 has is n, the number of the concave portion Q of the opening 212 may be n or more. In the present example, since the protrusion 143 has a triangle shape (n = 3) in the top view, the opening 212 may be a polygon more having three or more sides (n ≥ 3). The opening 212 in the present example has a hexagonal shape.

The direction of the ejection portion 14 in the XY plane may be set by aligning the position of the convex portion P of the protrusion 143 with the concave portion Q of the opening 212 in the top view. In the present example, the direction of the ejection portion 14-11B in the XY plane is set by aligning the positions of the convex portions P1, P2, and P3 of the protrusion 143 in the top view with the positions of the concave portions Q1, Q3, and Q6, respectively, of the opening 212 in the top view.

Each of the positions of the plurality of convex portions P of the protrusion 143 and the plurality of concave portions Q of the opening 212 may be set according to the direction of the ejection portion 14 in the XY plane. The direction of the ejection portion 14 in the XY plane may be determined according to the range in which the liquid 40 is ejected (the range within the two large dashed lines W in Fig. 20). In the present example, the direction of the ejection portion 14 is set according to the degree of the angle 2θ. Then, according to the direction of the ejection portion 14, the positions of the convex portions P1, ... and P3 and the concave portions Q1, Q3, and Q5 in the XY plane are set.

In the present example, the position of the convex portion P1 in the XY plane is set to the position that is in the normal direction of the ejection plane 146 and in the direction (the direction D) passing through the center C2 (see Fig. 17), and the positions of other convex portion P2 and the convex portion P3 of the equilateral triangle are set according to the position of the convex portion P1. In addition, in the present example, the positions of the concave portions Q1, Q3, and Q5 are set such that the protrusions 143 of the equilateral triangular shape inscribe the opening 212 of the regular hexagonal shape. In the present example, by setting the positions of the convex portion P and the concave portion Q in such a manner, the direction of the ejection portion 14-11B in the XY plane can be set.

Here, Fig. 18 will be described again below. The direction connecting the apex of one protrusion 143 of one ejection portion 14 and the apex of one protrusion 143 of another ejection portion 14 may be parallel to the extending direction of one branch tube 13. In Fig. 18 as an illustrative example, the direction connecting the apex (the convex portion PI in Fig. 20) of one protrusion 143 of one ejection portion 14 (the ejection portion 14-11B arranged to be closest to the side of the trunk tube 12) and the apex (the convex portion PI in Fig. 20) of one protrusion 143 of another ejection portion 14 (the ejection portion 14-11B arranged to be closest to the side of the end portion EN) is parallel to the extending direction (the direction F) of one branch tube 13 (the branch tube 13-11B). In the example of Fig. 18, the direction connecting the concave portion Q1 of the fixture 200 corresponding to the convex portion P1 of the one ejection portion 14 (the ejection portion 14-11B arranged to be closest to the side of the trunk tube 12) and the concave portion Q1 of the fixture 200 corresponding to the convex portion P1 of another ejection portion 14 (the ejection portion 14-11B arranged to be closest to the side of the end portion EN) is also parallel to the extending direction (direction F) of one branch tube 13 (the branch tube 13-11B). Thereby, the plurality of ejection portions 14 is set in the same direction by the fixture 200 altogether.

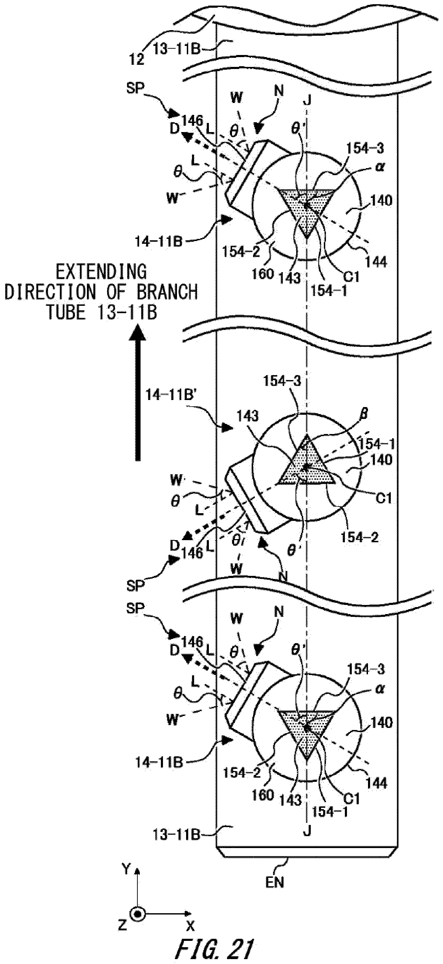

Fig. 21 is a figure showing one example of another arrangement of a plurality of ejection portions 14 connected to one branch tube 13. In the present example, three ejection portions 14 are connected to one branch tube 13. In the present example, the ejection portion arranged on the center of the direction F (the extending direction of the branch tube 13-11B) is referred to as the ejection portion 14-11B'. In the present example, one ejection portion 14-11B and another ejection portion 14-11B' connected to one branch tube 13-11B are arranged in different orientations in the XY plane. The present example is different from the example shown in Fig. 18 in these respects.

In the present example, the angle formed by one side plane 154 of the protrusion 143 in one ejection portion 14 and the extending direction of the branch tube 13 is different from the angle formed by one side plane 154 of the protrusion 143 in another ejection portion 14 and the extending direction of the branch tube 13. In Fig. 21 as an illustrative example, the angle formed by one side plane 154 (the side plane 154-3) of the protrusion 143 in one ejection portion 14 (the ejection portion 14-11B arranged to be closest to the side of the trunk tube 12) and the extending direction (the direction F) of the branch tube 13 is the angle α. In addition, the angle formed on the side of the end portion EN by one side plane 154 (the side plane 154-3) of the protrusion 143 in another ejection portion 14 (the ejection portion 14-11B') and the extending direction (the direction F) of the branch tube 13 is referred to as the angle β. In the present example, the degree of the angle α is different from the degree of the angle β. In other words, the angle formed by one side plane 154 of the protrusion 143 in one ejection portion 14 and the extending direction of the branch tube 13 is different from the angle formed by one side plane 154 of the protrusion 143 in another ejection portion 14 and the extending direction of the branch tube 13.

The acute angle θ' formed by the direction D in which the one ejection portion 14 (the ejection portion 14-11B arranged to be closest to the side of the trunk tube 12) ejects the liquid 40 from the ejection plane 146 and the extending direction F of one branch tube 13 (the branch tube 13-11B) may be equal to the acute angle θ' formed by the direction D in which another ejection portion 14 (the ejection portion 14-11B') ejects the liquid 40 from the ejection plane 146 and the extending direction F of one branch tube 13 (the branch tube 13-11B).

The angle θ' formed in the direction of the central axis of the trunk tube 12 by the direction D in which one ejection portion 14 (the ejection portion 14-11B arranged to be closest to the side of the trunk tube 12) ejects the liquid 40 from the ejection plane 146 and the extending direction F of one branch tube 13 (the branch tube 13-11B) may be different from the angle (180° - θ' in the present example) formed in the direction of the central axis of the trunk tube 12 by the direction D in which the another ejection portion 14 (the ejection portion 14-11B') ejects the liquid 40 from the ejection plane 146 and the extending direction F of one branch tube 13 (the branch tube 13-11B).

One side plane 154 (the side plane 154-3) of one ejection portion 14 (the ejection portion 14-11B arranged to be closest to the side of the trunk tube 12) and one side plane 154 (the side plane 154-2) of another ejection portion 14 (the ejection portion 14-11B') may extend in the direction orthogonal to the extending direction F of one branch tube 13 (the branch tube 13-11B) The acute angle formed by one side plane 154 (the side plane 154-2) of one ejection portion 14 (the ejection portion 14-11B arranged to be closest to the side of the trunk tube 12) and the extending direction F of one branch tube 13 (the branch tube 13-11B) may be equal to the acute angle formed by one side plane 154 (the side plane 154-3) of another ejection portion 14 (the ejection portion 14-11B') and the extending direction F of one branch tube 13 (the branch tube 13-11B). The angle formed in the direction of the central axis of the trunk tube 12 by the direction D in which one ejection portion 14 (the ejection portion 14-11B arranged to be closest to the side of the trunk tube 12) ejects the liquid 40 from the ejection plane 146 and one side plane 154 (the side plane 154-2) of one ejection portion 14 (the ejection portion 14-11B arranged to be closest to the side of the trunk tube 12) may be different from the angle formed in the direction of the central axis of the trunk tube 12 by the direction D in which another ejection portion 14 (the ejection portion 14-11B') ejects the liquid 40 from the ejection plane 146 and one side plane 154 (the side plane 154-3) of another ejection portion 14 (the ejection portion 14-11B').

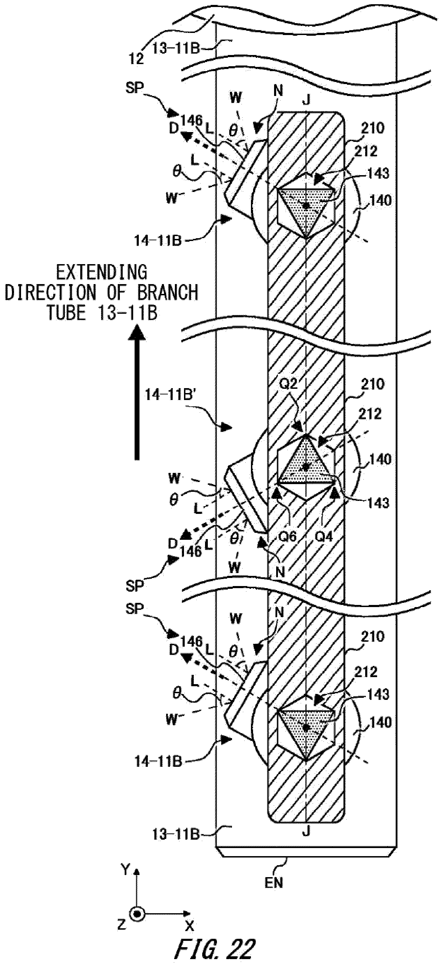

Fig. 22 is a figure showing the fixture 210, which is aligned with Fig. 21, for determining the direction of the plurality of ejection portions 14-11. In the present example, the fixture 210 determines the direction of one ejection portion 14-11B' and two ejection portions 14-11B. In the present example, the positions of the convex portions P1, P2, and P3 (see Fig. 20) in the ejection portion 14-11B' is aligned with the positions of the concave portions Q6, Q2, and Q4, respectively, by the fixture 210. Thereby, one ejection portion 14-11B connected to one branch tube 13-11B and another ejection portion 14-11B' are arranged in different orientations in the XY plane.

The direction in which the ejection portion 14-11B' ejects the liquid 40 is referred to as the direction D'. In the present example, the direction of the ejection portion 14-11B' in the XY plane is set as described above so that the direction D and the direction D' in which two ejection portions 14-11B eject the liquid 40 are in the mirror symmetry relative to the XZ plane.

In addition, in the present example, the direction of the ejection portion 14-11B' in the XY plane is set as described above so that the direction D' and the direction F form the angle θ' on the side of the end portion EN. If the angle θ is equal to the angle θ', the direction D' and the direction F form the angle θ on the side of the end portion EN.

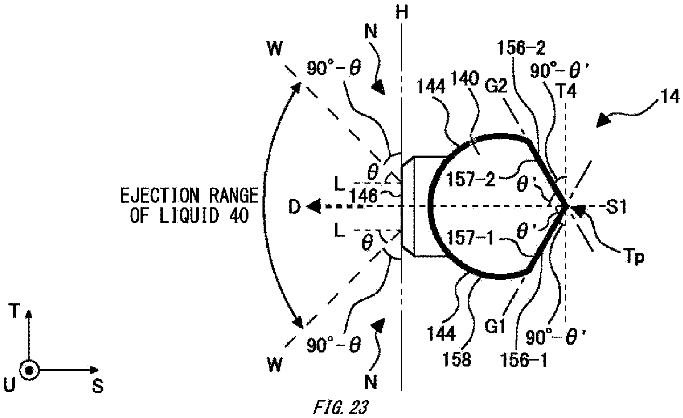

Fig. 23 is a figure showing of another one example of the top view of the ejection portion 14. The ejection portion 14 has the side plane 144 and the one or more side planes 156. The ejection portion 14 of the present example has two side planes 156 (the side plane 156-1 and the side plane 156-2). In the present example, the ejection portion 14 has one side plane 156 (the side plane 156-1), another side plane 156 (the side plane 156-2) and yet another side plane 144. In the present example, a yet another side plane 144 is curved in the top view. In Fig. 23, the extending direction of the side plane 156-1 and the extending direction of the side plane 156-2 are indicated with the dashed-and-dotted line G1 and the dashed-and-dotted line G2, respectively.

In the present example, the angle formed by the ejection plane 146 and the side plane 156-1 and the angle formed by the ejection plane 146 and the side plane 156-2 are referred to as θ'. The angle θ' may be equal to or may be different from the angle θ. The angle θ' may be more than 0° and less than 45° or may be more than 45° and less than 90°. The angle θ' may be more than or equal to 5° and less than or equal to 40° or may be more than or equal to 15° and less than or equal to 30°. In addition, the angle θ' may be more than or equal to 50° and less than or equal to 85° or may be more than or equal to 60° and less than or equal to 75°. The angle θ' of the present example is 60°.

In the S axis direction, the end portion of the top portion 140 that is on the opposite side to the ejection plane 146 is referred to as the end portion Tp. In Fig. 23, the dashed line in the T axis direction passing through the end portion Tp is indicated with a dashed line T4. In the present example, the position of the end portion Tp in the T axis direction is the same as the position of the dashed line S1. The position of the end portion Tp in the T axis direction may be different from the position of the dashed line S1.

In one ejection portion 14, the angle formed by one side plane 156 and another side plane 156 may be more than 0° and less than 90° or may be more than 90° and less than 180°. In other words, one side plane 156 in one ejection portion 14 may not be orthogonal to and may not be parallel to another side plane 156. In the present example, the angle (2θ' in Fig. 23) formed by one side plane 156 (the side plane 156-1) and another side plane 156 (the side plane 156-2) in one ejection portion 14 is more than 90° and less than 180°. The angle 2θ' formed by the side plane 156-1 and the side plane 156-2 may be more than or equal to 100° and less than or equal to 140°, or may be more than or equal to 110° and less than or equal to 130°. The angle 2θ' is for example 120°.

In Fig. 23, the outline 158 of the ejection portion 14 is indicated with a thick line. The outline 158 of the ejection portion 14 means the contour of the top portion 140 in the top view. In other words, the top portion 140 in the present example is the closed region surrounded by the outline 158.

The side plane 156 may be the plane of the outline 158. In the present example, the outline 158 consists of the side plane 144, the side plane 156-1, and the side plane 156-2. In other words, the side plane 156 of the present example is the side plane other than the side plane 144.

The side plane 156 may have a straight portion 157 in the top view. In other words, at least a part of the side plane 156 may be straight in the top view. The straight portion 157 of the side plane 156 means the portion where the side plane 156 has the shape of a straight line at the position of the top portion 140 in the U axis direction. In the present example, the side plane 156 is entirely straight in the top view.

The straight portion 157-1 and the straight portion 157-2 are the straight portion 157 of the side plane 156-1 and the side plane 156-2, respectively. The side plane 156-1 and the side plane 156-2 in the present example extend in the direction of the dashed-and-dotted line G1 and the dashed-and-dotted line G2, respectively, in the top view.

One side plane 156 (the side plane 156-1) and another side plane 156 (the side plane 156-2) may cross each other in the top view. In the present example, the side plane 156-1 and the side plane 156-2 cross each other at the end portion Tp in the top view. In other words, the side plane 156-1 and the side plane 156-2 in the present example contact each other at the end portion Tp in the top view. In addition, each of the side plane 144 and the side plane 156-1, and the side plane 144 and the side plane 156-2 in the present example crosses each other in the top view. In the direction D in which the ejection plane 146 of the ejection portion 14 ejects the liquid 40, the ejection plane 146 and the side plane 144 may be opposite to each other.

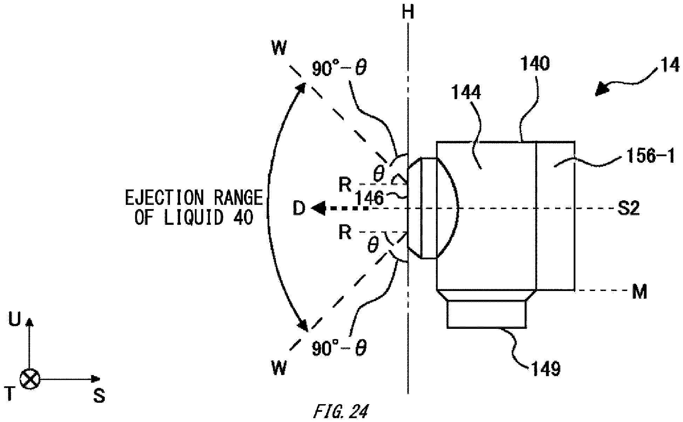

Fig. 24 is a figure showing another one example of the ejection portion 14 in the side view. The ejection portion 14 in the present example has the side plane 144 and the side plane 156. The side plane 156 may extend in the direction from the top portion 140 to the lower plane 149 in the U axis direction.

The position of the lower end of the side plane 144 in the U axis direction is referred to as the position M. The side plane 156 may extend in the U axis direction from the top portion 140 to the position M. If the orientations of the plurality of ejection portions 14 in the XY plane are determined by the side plane 156 and the fixture 200 (described later), the contact area between the side plane 156 and the fixture 200 is preferably large. Thus, the side plane 156 preferably extends in the U axis direction from the top portion 140 to the position M.

The top portion 140 in the present example is parallel to the ST plane. If the ST plane is in the horizontal direction, the top portion 140 in the present example is parallel to the horizontal direction. The top portion 140 may tilt relative to the horizontal direction.. If the top portion 140 tilts relative to the horizontal direction, the liquid 40 ejected from the ejection portion 14 is less likely to remain on the top portion 140.

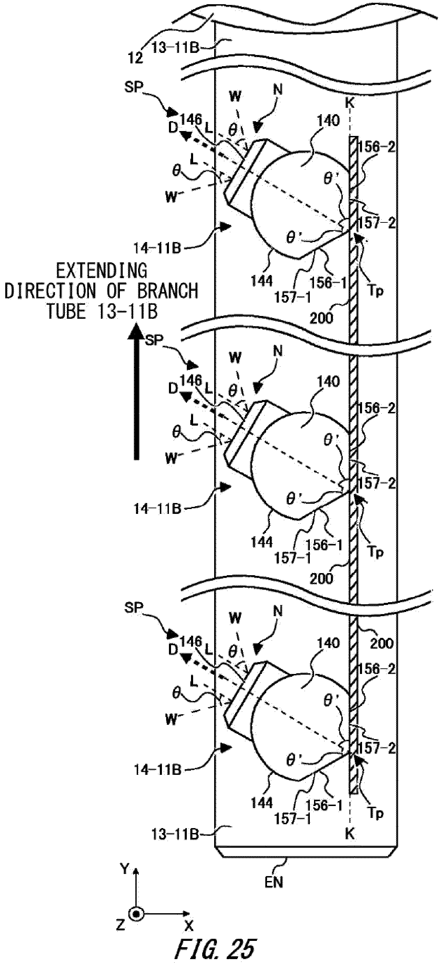

Fig. 25 is a figure showing one example of the arrangement of a plurality of ejection portions 14 connected to one branch tube 13. In the present example, instead of the ejection portions 14-11B in Fig. 8, the ejection portions 14-11B shown in Fig. 23 - Fig. 24 are connected to the branch tube 13-11B. In addition, in Fig. 25, the fixture 200 for determining the directions of the ejection portions 14-11 in the XY plane is shown.

In Fig. 25, the straight line passing through the side planes 156-2 of each of three ejection portions 14 is indicated with a dashed line K. The dashed line K is parallel to the Y axis direction.

In the present example, each of the plurality of ejection portions 14 has the side plane 156. Thus, the orientations of the side planes 156 of each of the plurality of ejection portions 14 connected to one branch tube 13 are matched with each other so that the plurality of ejection portions 14 connected to one branch tube 13 is arranged in the same orientation. In the present example, by aligning the fixture 200 to the side planes 156-2 of each of three ejection portions 14-11B connected to the branch tube 13-11B, each of the side planes 156-2 is arranged to be parallel to the dashed line K. In other words, in the present example, the orientations of the three ejection portions 14-11B can be set altogether in the direction that causes the direction D (the direction in which the liquid 40 is ejected) and the direction F (the extending direction of the branch tube 13-11B (the Y axis direction)) to form the angle θ, without separately setting each of the orientations of the three ejection portions 14-11B.

As described above, when the orientations of the plurality of ejection portions 14 are set altogether by the fixture 200, the side plane 156 preferably has the straight portion 157 in the top view. If the side plane 156 has the straight portion 157 in the top view, the orientations of the plurality of ejection portions 14 can be easily set altogether by contacting the side plane (the YZ plane in Fig. 25) of the fixture 200 with the side plane 150.

One side plane 156 of one ejection portion 14 and one side plane 156 of another ejection portion 14 may extend in the extending direction of one branch tube 13. In Fig. 25 as an illustrative example, one side plane 156 (the side plane 156-2) of one ejection portion 14 (the ejection portion 14-11B arranged to be closest to the side of the trunk tube 12) and one side plane 156 (the side plane 156-2) of another ejection portion 14 (the ejection portion 14-11B arranged to be closest to the side of the end portion EN) extend in the extending direction (the direction F) of one branch tube 13 (the branch tube 13-11B).

One side plane 156 of one ejection portion 14 and one side plane 156 of another ejection portion 14 may extend in the same straight line. In Fig. 25 as an illustrative example, one side plane 156 (the side plane 156-2) of one ejection portion 14 (the ejection portion 14-11B arranged to be closest to the side of the trunk tube 12) and one side plane 156 (the side plane 156-2) of another ejection portion 14 (the ejection portion 14-11B arranged to be closest to the side of the end portion EN) extend on the same straight line. In the example of Fig. 25, the straight line extends in the extending direction (the direction F) of one branch tube 13 (the branch tube 13-11B).

One side plane 156 (the side plane 156-2) of one ejection portion 14 (the ejection portion 14-11B arranged to be closest to the side of the trunk tube 12), wherein the one side plane 156 (the side plane 156-2) is arranged in the position that overlaps the ejection plane 146 when seen from the direction D in which the liquid 40 is ejected from the ejection plane 146 of the one ejection portion 14, and one side plane 156 (the side plane 156-2) of another ejection portion 14 (the ejection portion 14-11B arranged to be closest to the side of the end portion EN), wherein the one side plane 156 (the side plane 156-2) arranged in the position that overlaps the ejection plane 146 when seen from the direction D in which the liquid 40 is ejected from the ejection plane 146 of the another ejection portion 14, may extend in the extending direction F of one branch tube 13 (the branch tube 13-11B). The acute angle θ' formed by the direction D in which the one ejection portion 14 ejects the liquid 40 from the ejection plane 146 and one side plane 156 (the side plane 156-2) of the one ejection portion 14 may be equal to the acute angle θ' formed by the direction D in which the another ejection portion 14 ejects the liquid 40 from the ejection plane 146 and one side plane 156 (the side plane 156-2) of the another ejection portion 14.

The angle θ' formed on the side of the central axis of the trunk tube 12 by the direction D in which one ejection portion 14 (the ejection portion 14-11B arranged to be closest to the side of the trunk tube 12) ejects the liquid 40 from the ejection plane 146 and one side plane 156 (the side plane 156-2) of the one ejection portion 14 may be equal to the angle θ' formed on the side of the central axis of the trunk tube 12 by the direction D in which another ejection portion 14 (the ejection portion 14-11B arranged to be closest to the side of the end portion EN) ejects the liquid 40 from the ejection plane 146 and one side plane 156 (the side plane 156-2) of the another ejection portion 14.

In the present example, one side plane 156 (the side plane 156-2) of one ejection portion 14 (the ejection portion 14-11B arranged to be closest to the side of the trunk tube 12) and one side plane 156 (the side plane 156-2) of another ejection portion 14 (the ejection portion 14-11B arranged to be closest to the side of the end portion EN) extend in the extending direction F of one branch tube 13 (the branch tube 13-11B). In the present example, the acute angle formed by the direction D in which the one ejection portion 14 ejects the liquid 40 from the ejection plane 146 and the one side plane 156 of the one ejection portion 14 is equal to the acute angle formed by the direction D in which the another ejection portion 14 ejects the liquid 40 from the ejection plane 146 and the one side plane 156 of the another ejection portion. Thus, in the present example, by aligning the fixture 200 on the side plane 156 of each of the plurality of ejection portions 14-11B connected to the branch tube 13-11B, the orientations of the plurality of ejection portions 14-11B can be set altogether in the direction that causes the direction D (the direction in which the liquid 40 is ejected) and the direction F (the extending direction (the Y axis direction) of the branch tube 13-11B) to form the angle θ, without separately setting the orientations of the plurality of ejection portions 14-11B.

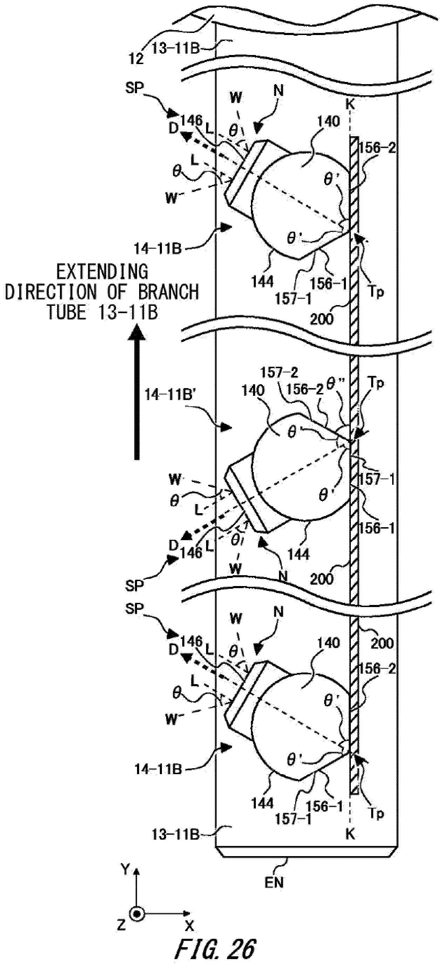

Fig. 26 is a figure showing one example of another arrangement of the plurality of ejection portions 14 connected to one branch tube 13. In the present example, three ejection portions 14 are connected to one branch tube 13. In the present example, the ejection portion arranged at the center in the direction F (the extending direction of the branch tube 13-11B) is referred to as the ejection portion 14-11B'. In the present example, one ejection portion 14-11B and another ejection portion 14-11B connected to one branch tube 13-11B' are arranged in different orientations in the XY plane. The present example is different from the example shown in Fig. 25 in these respects.

The angle formed by the side plane 156-2 of the ejection portion 14-11B' and the direction F is referred to as the angle θ". The angle θ" may be equal to or may be different from the angle θ'.

In the present example, the angle formed by one side plane 156 in one ejection portion 14 and the extending direction of the branch tube 13 is different from the angle formed by one side plane 156 in another ejection portion 14 and the extending direction of the branch tube 13. In Fig. 26 as an illustrative example, the angle formed by one side plane 156 (the side plane 156-2) in one ejection portion 14 (the ejection portion 14-11B arranged to be closest to the side of the trunk tube 12) and the extending direction (the direction F) of the branch tubes 13 is 0°. In addition, the angle formed by one side plane 156 (the side plane 156-2) in another ejection portion 14 (the ejection portion 14-11B') and the extending direction (the direction F) of the branch tubes 13 is the angle θ". In other words, in the example of Fig. 26, the angle formed by one side plane 156 in one ejection portion 14 and the extending direction of the branch tube 13 is different from the angle formed by one side plane 156 in another ejection portion 14 and the extending direction of the branch tube 13.

The orientation in which the ejection portion 14-11B' ejects the liquid 40 is the direction D'. In the present example, the extending direction of the side plane 156-1 of the ejection portion 14-11B' and the direction D' form the angle θ' on the side of the end portion EN. Thus, when the angle θ is equal to the angle θ', the extending direction of the side plane 156-1 is aligned with the direction F by means of the fixture 200 so that the ejection portion 14-11B' is arranged in a direction that causes the direction D' and the direction F to form the angle θ.

In the present example, a plurality of side planes 156 in one ejection portion 14 is provided such that the angles relative to the branch tube 13 are different from each other. In other words, in the ejection portion 14-11B' shown in Fig. 26, the angle formed on the side of the end portion EN by the side plane 156-1 and the branch tubes 13 is 0° while the angle formed on the side of the end portion EN by the side plane 156-2 and the branch tubes 13 is 2θ'. Thus, when the plurality of ejection portions 14 is connected to one branch tube 13, the plurality of ejection portions 14 can be set in the directions relative to the branch tube 13 that are different from each other.

In the plurality of ejection portions 14 connected to one branch tube 13, as in the example shown in Fig. 11, the angles formed by each of the side planes 156 of the ejection portions 14 and the orientation in which the liquid 40 is ejected may be different from each other. In this case, by aligning the extending direction of each of the side planes 156 of the ejection portions 14 with the direction F (the extending direction of the branch tube 13-11B) by means of the fixture 200, the plurality of ejection portions 14 can be set in orientations different from each other.

The angle formed by the direction in which one ejection portion 14 ejects the liquid 40 and the extending direction of one branch tube 13 may be different from the angle formed by the direction in which the another ejection portion 14 ejects the liquid 40 and the extending direction of one branch tube 13. In Fig. 26 as an illustrative example, the direction in which one ejection portion 14 (the ejection portion 14-11B arranged to be closest to the side of the trunk tube 12) ejects the liquid 40 and the extending direction (the direction F) of the one branch tube 13 (the branch tube 13-11B) form the angle θ' on the side of the trunk tube 12, and the direction in which another ejection portion 14 (the ejection portion 14-11B') ejects the liquid 40 and the extending direction (the direction F) of the one branch tube 13 (the branch tube 13-11B) form the angle θ' on the side of the end portion EN. In other words, in the example of Fig. 26, the direction in which the ejection portion 14-11B ejects the liquid 40 and the direction in which the ejection portion 14-11B' ejects the liquid 40 relative to the direction F of the branch tubes 13 (the extending direction) are different from each other.

One side plane 156 (the side plane 156-2) of one ejection portion 14 (the ejection portion 14-11B arranged to be closest to the side of the trunk tube 12), wherein the one side plane 156 (the side plane 156-2) is arranged in the position that overlaps the ejection plane 146 when seen from the direction D in which the liquid 40 is ejected from the ejection plane 146 of the one ejection portion 14, and one side plane 156 (the side plane 156-1) of another ejection portion 14 (the ejection portion 14-11B'), wherein the one side plane 156 (the side plane 156-1) is arranged in the position that overlaps the ejection plane 146 when seen from the direction D in which the liquid 40 is ejected from the ejection plane 146 of the another ejection portion 14, may extend in the extending direction F of one branch tube 13 (the branch tube 13-11B). The acute angle θ' formed by the direction D in which the one ejection portion 14 ejects the liquid 40 from the ejection plane 146 and one side plane 156 (the side plane 156-2) of the one ejection portion 14 may be equal to the acute angle θ' formed by the direction D in which the another ejection portion 14 ejects the liquid 40 from the ejection plane 146 and one side plane 156 (the side plane 156-1) of the another ejection portion 14.

The angle θ' formed on the side of the central axis of the trunk tube 12 by the direction D in which one ejection portion 14 (the ejection portion 14-11B arranged to be closest to the side of the trunk tube 12) ejects the liquid 40 from the ejection plane 146 and one side plane 156 (the side plane 156-2) of the one ejection portion 14 may be different from the angle (180° - θ' in the present example) formed on the side of the central axis of the trunk tube 12 by the direction D in which another ejection portion 14 (the ejection portion 14-11B') ejects the liquid 40 from the ejection plane 146 and one side plane 156 (the side plane 156-1) of another ejection portion 14.

Notably, the angle formed by the side plane 156 of the ejection portion 14 connected to one branch tube 13 and the one branch tube 13 may be different from the angle formed by the side plane 156 of the ejection portion 14 connected to another branch tube 13 and the another branch tube 13. For example, the angle formed by the side plane 156 of the ejection portion 14-11B connected to the branch tube 13-11B and the branch tube 13-11B may be different from the angle formed by the side plane 156 of the ejection portion 14-12A connected to the branch tube 13-12A (see Fig. 2) and the branch tube 13-12A. In addition, for example, the angle formed by the side plane 156 of the ejection portion 14-11B connected to the branch tube 13-11B and the branch tube 13-11B may be different from the angle formed by the side plane 156 of the ejection portion 14-2B connected to the branch tube 13-2B (see Fig. 1) and the branch tube 13-2B.

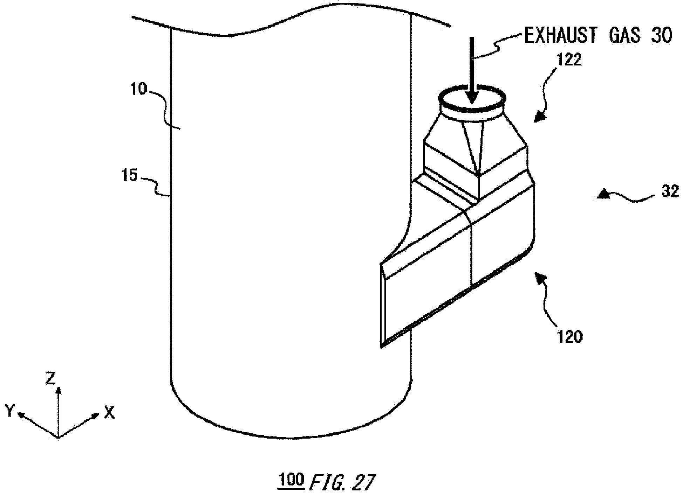

Fig. 27 is a perspective view of the exhaust gas treatment apparatus 100 according to one embodiment of the present invention. Fig. 27 is an enlarged view of the region including the reactor tower 10 and the exhaust gas feed tube 32 connected to the reactor tower 10.

The exhaust gas feed tube 32 in the present example has a rectangular elbow 120 and a circular and rectangular duct 122. The number of curved metal sheets used for the rectangular elbow 120 is less than the number of curved metal sheet used for the circular elbow. In addition, the area of the curved metal sheet used for the rectangular elbow 120 is less than the area of the curved metal sheet used for the circular elbow. Thus, the exhaust gas feed tube 32 in the present example can reduce the number and area of the curved metal sheet in comparison with the case in which the circular elbow is used. Thus, the exhaust gas treatment apparatus 100 in the present example easily reduces the manufacturing cost in comparison with the exhaust gas treatment apparatus in the comparative example described later.

In addition, since the shape of the cross section of the duct (the XY cross section in the present example) of the circular and rectangular duct 122 changes from a rectangular shape to a circular shape in the extending direction (the Z axis direction in the present example) of the duct, the width of the duct in the extending direction tends to be large. Since in the present example the extending direction of the duct is the direction (the Z axis direction) that is parallel to the side wall 15 of the reactor tower 10, a portion of the exhaust gas feed tube 32 that is parallel to the Z axis direction can be easily arranged to be closer to the reactor tower 10 than in the comparative example described later. Thus, the size of the exhaust gas treatment apparatus 100 can be easily reduced when the rectangular elbow 120 and the circular and rectangular duct 122 are used.

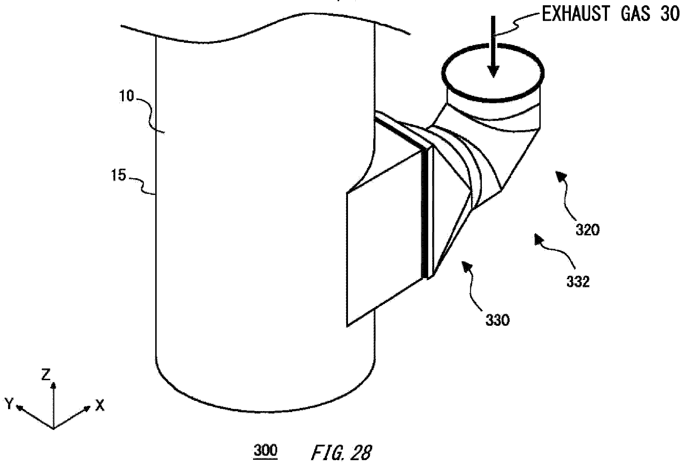

Fig. 28 is a perspective view of the exhaust gas treatment apparatus 300 in the comparative example. Fig. 28 is an enlarged view showing the region including the reactor tower 10 and the exhaust gas feed tube 332 connected to the reactor tower 10.

The exhaust gas feed tube 332 in the present example has the circular elbow 320 and the circular and rectangular duct 330. The number of the curved metal sheet used for the circular elbow 320 is larger than the number of the curved metal sheet used for the rectangular elbow 120. In addition, the area of the curved metal sheet used for the circular elbow 320 is larger than the area of the curved metal sheet used for the rectangular elbow 120. Thus, the exhaust gas feed tube 332 in the comparative example has a difficulty in reducing the number and area of the curved metal sheet in comparison with the case in which the rectangular elbow 120 is used. Thus, the exhaust gas treatment apparatus 300 in the comparative example has a difficulty in reducing the manufacturing cost in comparison with the exhaust gas treatment apparatus 100 shown in Fig. 27.

In addition, since the exhaust gas treatment apparatus 300 in the comparative example has the circular and rectangular duct 330 between the circular elbow 320 and the reactor tower 10 in the feed path of the exhaust gas 30, the width in the extending direction (the X axis direction in the present comparative example) of the duct tends to be larger than that of the example shown in Fig. 27. Thus, in the exhaust gas treatment apparatus 300 in the comparative example, the portion of the exhaust gas feed tube 332 that is parallel to the Z axis direction is difficult to be arranged to be closer to the reactor tower 10 in comparison with the example shown in Fig. 27. Thus, if the circular elbow 320 and the circular and rectangular duct 330 are used, the size of the exhaust gas treatment apparatus 300 is difficult to be reduced.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 reactor tower
11 gas feed opening
12 trunk tube
13 branch tube
14 ejection portion
15 side wall
16 bottom plane
17 gas outlet
18 gas treatment portion
19 liquid outlet
20 drain pipe
30 exhaust gas
32 exhaust gas feed tube
40 liquid
50 power apparatus
60 pump
70 valve
100 exhaust gas treatment apparatus
114 ejection portion
120 rectangular elbow
122 circular and rectangular duct
140 top portion
142 groove
143 protrusion
144 side plane
146 ejection plane
148 opening
149 lower plane
150 side plane
152 straight portion
154 side plane
156 side plane
157 straight portion
158 outline
160 upper plane
200 fixture
240 top portion
244 side plane
246 ejection plane
248 opening
249 lower plane
300 exhaust gas treatment apparatus
320 circular elbow
330 circular and rectangular duct
332 exhaust gas feed tube
400 exhaust gas treating system

## Claims

1. An exhaust gas treatment apparatus comprising:
a reactor tower to which an exhaust gas is fed and to which a liquid for treating the exhaust gas is supplied; and
one or more ejection portions that are provided within the reactor tower and configured to eject the liquid, wherein
a top portion of the ejection portions has one or more grooves or one or more protrusions.

2. The exhaust gas treatment apparatus according to claim 1, wherein the one or more grooves are provided to extend from one end to another end of the top portion of the ejection portions.

3. The exhaust gas treatment apparatus according to claim 1 or 2, further comprising branch tubes that are provided within the reactor tower and to which the liquid is supplied, wherein
each of the ejection portions has a top portion and an ejection plane that is provided in a direction that crosses the top portion,
the ejection portion is configured to eject the liquid from the ejection plane,
the branch tubes extend in directions that cross a central axis that is in a direction from a feeding side toward a discharging side of the exhaust gas in the reactor tower,
a plurality of the ejection portions is connected to one of the branch tubes, and
one of the grooves of one of the ejection portions and one of the grooves of another of the ejection portions extend in an extending direction of one of the branch tubes.

4. The exhaust gas treatment apparatus according to claim 3, wherein an acute angle formed by a direction in which one of the ejection portions ejects the liquid from the ejection plane and one of the grooves of one of the ejection portions is equal to an acute angle formed by a direction in which another of the ejection portions ejects the liquid from the ejection plane and one of the grooves of another of the ejection portions.

5. The exhaust gas treatment apparatus according to claim 4, wherein an angle formed in the direction of the central axis by a direction in which one of the ejection portions ejects the liquid from the ejection plane and an extending direction of one of the branch tubes is equal to an angle formed in the direction of the central axis by a direction in which another of the ejection portions ejects the liquid from the ejection plane and an extending direction of one of the branch tubes.

6. The exhaust gas treatment apparatus according to claim 3, wherein an acute angle formed by a direction in which one of the ejection portions ejects the liquid from the ejection plane and one of the grooves of one of the ejection portions is different from an acute angle formed by a direction in which another of the ejection portions ejects the liquid from the ejection plane and one of the grooves of another of the ejection portions.

7. The exhaust gas treatment apparatus according to claim 4 or 6, wherein an angle formed on a side of the central axis by a direction in which one of the ejection portions ejects the liquid from the ejection plane and an extending direction of one of the branch tubes is different from an angle formed on the side of the central axis by a direction in which another of the ejection portions ejects the liquid from the ejection plane and an extending direction of one of the branch tubes.

8. The exhaust gas treatment apparatus according to any one of claims 1 to 7, wherein an angle formed by one of the grooves and another of the grooves in one of the ejection portions is different from an angle formed by one of the grooves of another of the ejection portions and another of the grooves.

9. An exhaust gas treatment apparatus, comprising
a reactor tower to which an exhaust gas is fed and to which a liquid for treating the exhaust gas is supplied;
one or more ejection portions that are provided within the reactor tower and configured to eject the liquid; and
branch tubes that are provided within the reactor tower and to which the liquid is supplied, wherein
each of the ejection portions has a top portion and an ejection plane provided in a direction that crosses the top portion,
the ejection portion is configured to eject the liquid from the ejection plane,
the top portion has one or more grooves,
a plurality of the ejection portions is connected to one of the branch tubes, and
an angle formed by one of the grooves and another of the grooves in one of the ejection portions is different from an angle formed by one of the grooves and another of the grooves in another of the ejection portions.

10. The exhaust gas treatment apparatus according to any one of claims 3 to 9, wherein one of the grooves in one of the ejection portions and one of the grooves of another of the ejection portions extend on the same straight line.

11. The exhaust gas treatment apparatus according to any one of claims 3 to 10, wherein one of the grooves and another of the grooves in the top portion of one of the ejection portions are provided to have angles relative to the branch tubes that are different from each other.

12. The exhaust gas treatment apparatus according to any one of claims 3 to 11, wherein an angle formed by one of the grooves and another of the grooves in one of the ejection portions is more than 0° and less than 90°, or is more than 90° and less than 180°.

13. The exhaust gas treatment apparatus according to any one of claims 1 to 12, wherein a bottom plane of the grooves tilts relative to a horizontal direction.

14. The exhaust gas treatment apparatus according to any one of claims 1 to 13, wherein a side plane of the grooves has a straight portion in a top view of the ejection portions.

15. The exhaust gas treatment apparatus according to claim 1 or 2, further comprising branch tubes that are provided within the reactor tower and to which the liquid is supplied, wherein
each of the ejection portions has a top portion and an ejection plane that is provided in a direction that crosses the top portion,
the ejection portions are configured to eject the liquid from the ejection plane,
a plurality of the ejection portions is connected to one of the branch tubes,
the protrusions have a plurality of side planes whose angles relative to the branch tubes are different from each other,
the branch tubes extend in directions that cross a central axis that is in a direction from a feeding side toward a discharging side of the exhaust gas in the reactor tower,
one of the side planes of one of the ejection portions is parallel to the ejection plane of one of the ejection portions, and one of the side planes of another of the ejection portions is parallel to the ejection plane of another of the ejection portions, and
an acute angle formed by a direction in which one of the ejection portions ejects the liquid from the ejection plane and an extending direction of one of the branch tubes is equal to an acute angle formed by a direction in which another of the ejection portions ejects the liquid from the ejection plane and an extending direction of one of the branch tubes.

16. The exhaust gas treatment apparatus according to claim 15, wherein an angle formed in the direction of the central axis by a direction in which one of the ejection portions ejects the liquid from the ejection plane and an extending direction of one of the branch tubes is equal to an angle formed in the direction of the central axis by a direction in which another of the ejection portions ejects the liquid from the ejection plane and an extending direction of one of the branch tubes.

17. The exhaust gas treatment apparatus according to claim 15, wherein an angle formed in the direction of the central axis by a direction in which one of the ejection portions ejects the liquid from the ejection plane and an extending direction of one of the branch tubes is different from an angle formed in the direction of the central axis by a direction in which another of the ejection portions ejects the liquid from the ejection plane and an extending direction of one of the branch tubes.

18. An exhaust gas treatment apparatus, comprising:
a reactor tower to which an exhaust gas is fed and a liquid for treating the exhaust gas is supplied;
a plurality of ejection portions that is provided within the reactor tower and is configured to eject the liquid; and
branch tubes that are provided within the reactor tower and to which the liquid is supplied, wherein
the ejection portions have a top portion and an ejection plane provided in a direction that crosses the top portion,
the ejection portions are configured to eject the liquid from the ejection plane,
the top portion has one or more protrusions,
a plurality of the ejection portions is connected to one of the branch tubes,
the protrusions have a plurality of side planes whose angles relative to the branch tubes are different from each other,
the branch tubes extend in directions that cross a central axis that is in a direction from a feeding side toward a discharging side of the exhaust gas in the reactor tower,
one of the side planes of one of the ejection portions and one of the side planes of another of the ejection portions extend in a direction that is orthogonal to an extending direction of one of the branch tubes,
an acute angle formed by one of the side planes of one of the ejection portions and an extending direction of one of the branch tubes is equal to an acute angle formed by one of the side planes of another of the ejection portions and an extending direction of one of the branch tubes, and
an angle formed in the direction of the central axis by a direction in which one of the ejection portion ejects the liquid from the ejection plane and one of the side planes of one of the ejection portions is different from an angle formed in the direction of the central axis by a direction in which another of the ejection portions ejects the liquid from the ejection plane and one of the side planes of another of the ejection portions.

19. The exhaust gas treatment apparatus according to any one of claims 15 to 18, wherein a direction connecting an apex of one of the protrusions on one of the ejection portions and an apex of one of the protrusions on another of the ejection portions is parallel to an extending direction of one of the branch tubes.

20. An exhaust gas treatment apparatus, comprising:
a reactor tower to which an exhaust gas is fed and a liquid for treating the exhaust gas is supplied;
one or more ejection portions that are provided within the reactor tower and are configured to eject the liquid; and
branch tubes that are provided within the reactor tower and to which the liquid is supplied, wherein
the branch tubes extend in directions that cross a central axis that is in a direction from a feeding side toward a discharging side of the exhaust gas in the reactor tower,
a plurality of the ejection portions is connected to one of the branch tubes,
each of the ejection portions has an ejection plane for ejecting the liquid and one or more side planes, and
one of the side planes of one of the ejection portions and one of the side planes of another of the ejection portions extend in an extending direction of one of the branch tubes.

21. The exhaust gas treatment apparatus according to claim 20, wherein the one or more side planes are planes of outlines of the ejection portions in a top view of the ejection portions.

22. The exhaust gas treatment apparatus according to claim 21, wherein one of the side planes of one of the ejection portions that is arranged in a position that overlaps the ejection planes when seen from a direction in which one of the ejection portions ejects the liquid from the ejection plane and one of the side planes of another of the ejection portions that is arranged in a position that overlaps the ejection plane when seen from a direction in which another of the ejection portions ejects the liquid from the ejection plane extend in an extending direction of one of the branch tubes, and
an acute angle formed by a direction in which the liquid is ejected from the ejection plane of one of the ejection portion and one of the side planes of one of the ejection portions is equal to an acute angle formed by a direction in which another of the ejection portions ejects the liquid from the ejection plane and one of the side planes of another of the ejection portions.

23. The exhaust gas treatment apparatus according to claim 22, wherein an angle formed on a side of the central axis by a direction in which one of the ejection portions ejects the liquid from the ejection plane and one of the side planes of one of the ejection portions is equal to an angle formed on a side of the central axis by a direction in which another of the ejection portions ejects the liquid from the ejection plane and one of the side planes of another of the ejection portions.

24. The exhaust gas treatment apparatus according to claim 22, wherein an angle formed on a side of the central axis by a direction in which one of the ejection portions ejects the liquid from the ejection plane and one of the side planes of one of the ejection portions is different from an angle formed on a side of the central axis by a direction in which another of the ejection portions ejects the liquid from the ejection plane and one of the side planes of another of the ejection portions.

25. The exhaust gas treatment apparatus according to any one of claims 20 to 24, wherein one of the side planes of one of the ejection portions and one of the side planes of another of the ejection portions extend on the same straight line.

26. The exhaust gas treatment apparatus according to any one of claims 20 to 25, wherein in one of the ejection portions an angle formed by the ejection plane and one of the side planes is more than 0° and less than 45° or more than 45° and less than 90°.

27. The exhaust gas treatment apparatus according to any one of claims 20 to 26, wherein one of the side planes and another of the side planes cross each other in a top view of the ejection portion.

28. The exhaust gas treatment apparatus according to any one of claims 20 to 27, wherein
one of the ejection portions has one of the side planes, another of the side planes, and yet another of the side planes,
one of the side planes and another of the side planes have a straight portion in a top view of the ejection portions, and
yet another of the side planes is curved in a top view.

29. The exhaust gas treatment apparatus according to claim 28, wherein the ejection plane and yet another of the side planes are opposite to each other in a direction in which the ejection portion ejects the liquid from the ejection plane.

30. A scrubber nozzle comprising one or more grooves or one or more protrusions on a top portion of a scrubber nozzle for ejecting a liquid.

31. The scrubber nozzle according to claim 30, wherein the one or more grooves are provided to extend from one end to another end of the top portion of the scrubber nozzle.

32. The scrubber nozzle according to claim 30 or 31, wherein an angle formed by one of the grooves and another of the grooves is more than 0° and less than 90°, or more than 90° and less than 180°.

33. The scrubber nozzle according to any one of claims 30 to 32, wherein a bottom plane of the groove tilts relative to a horizontal direction.

34. The scrubber nozzle according to any one of claims 30 to 33, wherein a side plane of the grooves has a straight portion in a top view of the scrubber nozzle.

35. An exhaust gas treatment apparatus comprising a scrubber nozzle according to any one of claims 30 to 34.

## Amended claims

### Amended claims under Art. 19.1 PCT

1. the exhaust gas treatment apparatus further comprising branch tubes that are provided within the reactor tower and to which the liquid is supplied, wherein
each of the ejection portions has a top portion and an ejection plane that is provided in a direction that crosses the top portion ,
the ejection portion is configured to eject the liquid from the ejection plane,
the branch tubes extend in directions that cross a central axis that is in a direction from a feeding side toward a discharging side of the exhaust gas in the reactor tower, and
one of the grooves of one of the ejection portions and one of the grooves of another of the ejection portions extend in an extending direction of one of the branch tubes.

2. The exhaust gas treatment apparatus according to claim 1, wherein the one or more grooves are provided to extend from one end to another end of the top portion of the ejection portion.

3. The exhaust gas treatment apparatus according to claim 1 or 2, wherein an acute angle formed by a direction in which one of the ejection portions ejects the liquid from the ejection plane and one of the grooves of one of the ejection portions is equal to an acute angle formed by a direction in which another of the ejection portions ejects the liquid from the ejection plane and one of the grooves of another of the ejection portions.

4. The exhaust gas treatment apparatus according to claim 3, wherein an angle formed in the direction of the central axis by a direction in which one of the ejection portions ejects the liquid from the ejection plane and an extending direction of one of the branch tubes is equal to an angle formed in the direction of the central axis by a direction in which another of the ejection portions ejects the liquid from the ejection plane and an extending direction of one of the branch tubes.

5. The exhaust gas treatment apparatus according to claim 1 or 2, wherein an acute angle formed by a direction in which one of the ejection portions ejects the liquid from the ejection plane and one of the grooves of one of the ejection portions is different from an acute angle formed by a direction in which another of the ejection portions ejects the liquid from the ejection plane and one of the grooves of another of the ejection portions.

6. The exhaust gas treatment apparatus according to claim 3 or 5, wherein an angle formed on a side of the central axis by a direction in which one of the ejection portions ejects the liquid from the ejection plane and an extending direction of one of the branch tubes is different from an angle formed on the side of the central axis by a direction in which another of the ejection portions ejects the liquid from the ejection plane and an extending direction of one of the branch tubes.

7. The exhaust gas treatment apparatus according to any one of claims 1 to 6, wherein an angle formed by one of the grooves and another of the grooves in one of the ejection portions is different from an angle formed by one of the grooves of another of the ejection portions and another of the grooves.

8. An exhaust gas treatment apparatus, comprising
a reactor tower to which an exhaust gas is fed and to which a liquid for treating the exhaust gas is supplied;
one or more ejection portions that are provided within the reactor tower and configured to eject the liquid; and
branch tubes that are provided within the reactor tower and to which the liquid is supplied, wherein
each of the ejection portions has a top portion and an ejection plane provided in a direction that crosses the top portion,
the ejection portion is configured to eject the liquid from the ejection plane,
the top portion has one or more grooves,
a plurality of the ejection portions is connected to one of the branch tubes, and
an angle formed by one of the grooves and another of the grooves in one of the ejection portions is different from an angle formed by one of the grooves and another of the grooves in another of the ejection portions.

9. The exhaust gas treatment apparatus according to any one of claims 1 to 8, wherein one of the grooves in one of the ejection portions and one of the grooves of another of the ejection portions extend on the same straight line.

10. The exhaust gas treatment apparatus according to any one of claims 1 to 9, wherein one of the grooves and another of the grooves in the top portion of one of the ejection portions are provided to have angles relative to the branch tubes that are different from each other.

11. The exhaust gas treatment apparatus according to any one of claims 1 to 10, wherein an angle formed by one of the grooves and another of the grooves in one of the ejection portions is more than 0° and less than 90°, or is more than 90° and less than 180°.

12. The exhaust gas treatment apparatus according to any one of claims 1 to 11, wherein a bottom plane of the grooves tilts relative to a horizontal direction.

13. The exhaust gas treatment apparatus according to any one of claims 1 to 12, wherein a side plane of the grooves has a straight portion in a top view of the ejection portions.

14. An exhaust gas treatment apparatus, comprising:
a reactor tower to which an exhaust gas is fed and a liquid for treating the exhaust gas is supplied; and
one or more ejection portions that are provided within the reactor tower and configured to eject the liquid, wherein
a top portion of the ejection portions has one or more grooves or one or more protrusions,
the exhaust gas treatment apparatus further comprising branch tubes that are provided within the reactor tower and to which the liquid is supplied, wherein
each of the ejection portions has a top portion and an ejection plane that is provided in a direction that crosses the top portion,
the ejection portions are configured to eject the liquid from the ejection plane,
a plurality of the ejection portions is connected to one of the branch tubes,
the protrusions have a plurality of side planes whose angles relative to the branch tubes are different from each other,
the branch tubes extend in directions that cross a central axis that is in a direction from a feeding side toward a discharging side of the exhaust gas in the reactor tower,
one of the side planes of one of the ejection portions is parallel to the ejection plane of one of the ejection portions, and one of the side planes of another of the ejection portions is parallel to the ejection plane of another of the ejection portions, and
an acute angle formed by a direction in which one of the ejection portions ejects the liquid from the ejection plane and an extending direction of one of the branch tubes is equal to an acute angle formed by a direction in which another of the ejection portions ejects the liquid from the ejection plane and an extending direction of one of the branch tubes.

15. The exhaust gas treatment apparatus according to claim 14, wherein an angle formed in the direction of the central axis by a direction in which one of the ejection portions ejects the liquid from the ejection plane and an extending direction of one of the branch tubes is equal to an angle formed in the direction of the central axis by a direction in which another of the ejection portions ejects the liquid from the ejection plane and an extending direction of one of the branch tubes.

16. The exhaust gas treatment apparatus according to claim 14, wherein an angle formed in the direction of the central axis by a direction in which one of the ejection portions ejects the liquid from the ejection plane and an extending direction of one of the branch tubes is different from an angle formed in the direction of the central axis by a direction in which another of the ejection portions ejects the liquid from the ejection plane and an extending direction of one of the branch tubes.

17. An exhaust gas treatment apparatus, comprising:
a reactor tower to which an exhaust gas is fed and a liquid for treating the exhaust gas is supplied;
a plurality of ejection portions that is provided within the reactor tower and is configured to eject the liquid; and
branch tubes that are provided within the reactor tower and to which the liquid is supplied, wherein
the ejection portions have atop portion and an ejection plane provided in a direction that crosses the top portion,
the ejection portions are configured to eject the liquid from the ejection plane,
the top portion has one or more protrusions,
a plurality of the ejection portions is connected to one of the branch tubes,
the protrusions have a plurality of side planes whose angles relative to the branch tubes are different from each other,
the branch tubes extend in directions that cross a central axis that is in a direction from a feeding side toward a discharging side of the exhaust gas in the reactor tower,
one of the side planes of one of the ejection portions and one of the side planes of another of the ejection portions extend in a direction that is orthogonal to an extending direction of one of the branch tubes,
an acute angle formed by one of the side planes of one of the ejection portions and an extending direction of one of the branch tubes is equal to an acute angle formed by one of the side planes of another of the ejection portions and an extending direction of one of the branch tubes, and
an angle formed in the direction of the central axis by a direction in which one of the ejection portion ejects the liquid from the ejection plane and one of the side planes of one of the ejection portions is different from an angle formed in the direction of the central axis by a direction in which another of the ejection portions ejects the liquid from the ejection plane and one of the side planes of another of the ejection portions.

18. The exhaust gas treatment apparatus according to any one of claims 14 to 17, wherein a direction connecting an apex of one of the protrusions on one of the ejection portions and an apex of one of the protrusions on another of the ejection portions is parallel to an extending direction of one of the branch tubes.

19. An exhaust gas treatment apparatus comprising:
a reactor tower to which an exhaust gas is fed and a liquid for treating the exhaust gas is supplied;
one or more ejection portions that are provided within the reactor tower and configured to eject the liquid; and
branch tubes that are provided within the reactor tower and to which the liquid is supplied, wherein
the branch tubes extend in directions that cross a central axis that is in a direction from a feeding side toward a discharging side of the exhaust gas in the reactor tower,
a plurality of the ejection portions is connected to one of the branch tubes,
each of the ejection portions has an ejection plane for ejecting the liquid and one or more side planes,
one of the side planes of one of the ejection portions and one of the side planes of another of the ejection portions extend in an extending direction of one of the branch tubes,
the one or more side planes are planes of outlines of the ejection portions in a top view of the ejection portions,
one of the side planes of one of the ejection portions that is arranged in a position that overlaps the ejection planes when seen from a direction in which one of the ejection portions ejects the liquid from the ejection plane and one of the side planes of another of the ejection portions that is arranged in a position that overlaps the ejection plane when seen from a direction in which another of the ejection portions ejects the liquid from the ejection plane extend in an extending direction of one of the branch tubes, and
an acute angle formed by a direction in which the liquid is ejected from the ejection plane of one of the ejection portion and one of the side planes of one of the ejection portions is equal to an acute angle formed by a direction in which another of the ejection portions ejects the liquid from the ejection plane and one of the side planes of another of the ejection portions.

20. The exhaust gas treatment apparatus according to claim 19, wherein an angle formed on a side of the central axis by a direction in which one of the ejection portions ejects the liquid from the ejection plane and one of the side planes of one of the ejection portions is equal to an angle formed on a side of the central axis by a direction in which another of the ejection portions ejects the liquid from the ejection plane and one of the side planes of another of the ejection portions.

21. The exhaust gas treatment apparatus according to claim 19, wherein an angle formed on a side of the central axis by a direction in which one of the ejection portions ejects the liquid from the ejection plane and one of the side planes of one of the ejection portions is different from an angle formed on a side of the central axis by a direction in which another of the ejection portions ejects the liquid from the ejection plane and one of the side planes of another of the ejection portions.

22. The exhaust gas treatment apparatus according to any one of claims 19 to 21, wherein one of the side planes of one of the ejection portions and one of the side planes of another of the ejection portions extend on the same straight line.

23. The exhaust gas treatment apparatus according to any one of claims 19 to 22, wherein in one of the ejection portions an angle formed by the ejection plane and one of the side planes is more than 0° and less than 45° or more than 45° and less than 90°.

24. The exhaust gas treatment apparatus according to any one of claims 19 to 23, wherein one of the side planes and another of the side planes cross each other in a top view of the ejection portion.

25. The exhaust gas treatment apparatus according to any one of claims 19 to 24, wherein
one of the ejection portions has one of the side planes, another of the side planes, and yet another of the side planes,
one of the side planes and another of the side planes have a straight portion in a top view of the ejection portions, and
yet another of the side planes is curved in a top view.

26. The exhaust gas treatment apparatus according to claim 25, wherein the ejection plane and yet another of the side planes are opposite to each other in a direction in which the ejection portion ejects the liquid from the ejection plane.
